# EUROPEAN PATENT SPECIFICATION

(11) **EP 2 969 726 B1**
(45) Date of publication and mention of the grant of the patent: **27.08.2025**
(21) Application number: 14723175.7
(22) Date of filing: 13.03.2014
(51) Int. Cl.: B62K 25/20, B62K 25/28

(54) **BICYCLE REAR SUSPENSION**
HINTERRADAUFHÄNGUNG FÜR FAHRRÄDER
SUSPENSION ARRIÈRE DE BICYCLETTE

(30) Priority: 15.03.2013 US 201313840754
(43) Date of publication of application: 20.01.2016
(60) Divisional application: 20184352.1
(73) Proprietor: Voss, Darrell W., Vancouver, WA 98666 (US)
(72) Inventor: Voss, Darrell W., Vancouver, WA 98666 (US)
(74) Representative: Valet Patent Services Limited
(86) International application number: PCT/US2014/026847
(87) International publication number: WO 2014/152035

(56) References cited:
- WO-A1-2012/024697
- WO-A1-2014/009019
- WO-A1-95/29838
- FR-A1- 2 898 578
- US-B1- 6 361 059

## Description

### FIELD OF THE INVENTION

The invention relates generally to a vehicle and, more particularly, to a vehicle comprising a motion control system that couples a front and rear structure of the vehicle.

### BACKGROUND OF THE INVENTION

Bicycle frames may be equipped with no suspension, only a front suspension, or with both a front and rear suspension. Bicycles with only front suspension are referred to as hardtail bicycles. Bicycles with only a rear suspension are fairly uncommon, as bicycles with a rear suspension generally also have a front suspension. Bicycles with suspension in both the front and rear of the frame are referred to as full-suspension bikes.

In the distant past, bicycles often had no suspension other than the flex of the frame and softness of the pneumatic tires. Thus, the bicycles were essentially "rigid," such that the bicycle frame transmitted shock from riding on uneven terrain directly to the rider through the seat, pedals, and handlebars. The transmitted shock through the rigid frame to the rider resulted in discomfort to the rider. It also contributes to loss of control, especially with a mountain bike on rough terrain.

The most common frame design for a conventional upright bicycle consists of two triangles (i.e., a "diamond frame"), a main triangle forming the front of the frame and a paired triangle forming the rear of the frame. In the diamond frame, the main "triangle" consists of four tubes: the head tube, top tube, down tube and seat tube. The head tube contains the headset, which is the interface with the front forks and the handlebars - allowing them to rotate together relative to the frame. The top tube connects the head tube to the seat tube at the top of the frame. The down tube connects the head tube to the bottom bracket shell. The bottom bracket shell is located at the bottom of the seat tube. A bottom bracket is housed within the bottom bracket shell. The bottom bracket on a bicycle includes a crankset, which rotates. The bottom bracket comprises a spindle that houses the crankset and bearings, which allow the crankset to rotate relative to the spindle. The crankset is the component of a bicycle drivetrain that converts the reciprocating motion of the rider's legs into rotational motion used to drive the chain, which in turn drives the rear wheel. The crankset consists of one or more sprockets, also called chainrings attached to cranks to which the pedals attach.

The rear triangle consists of the seat tube connected by paired chain stays at the bottom of the seat tube and seat stays at an upper portion of the seat tube. The rear triangle connects to the rear fork ends or rear dropouts, where the rear wheel is attached. The rear fork ends include slots or apertures in the bicycle frame on each side of the rear wheel where the axle of a bicycle wheel is attached. The chain stays run connecting the bottom bracket to the rear fork ends. The seat stays connect the top of the seat tube, often located at or near the same point as the top tube, to the rear fork ends.

In order to reduce the discomfort associated with bicycles ridden on uneven terrain, suspension systems were developed. Besides providing comfort to the rider, suspension systems improve traction and safety by helping to keep one or both wheels in contact with the ground. Front suspension systems are often implemented using a telescopic fork configured as a shock absorber with a spring and damper in order to reduce transmitted shock. The implementation of the front suspension systems is relatively uncomplicated as the front wheel is supported by left and right forks that attach to a single head tube at the front of the bicycle frame. Rear suspension system designs may be more complicated due to the fact that the rear wheel is typically supported both by substantially horizontally oriented chain stays that are connected to the bottom bracket shell below the seat post and frame stays, which extend from the rear fork ends to an upper portion of the seat tube.

Rear bicycle frame suspensions are most commonly found in mountain bikes, due to the rough terrain experienced by mountain bike riders. The rear suspension, as with the front suspension, allows the rear wheel to move up and down relative to the rider to absorb shock forces and also to improve tire contact with the ground in rough terrain. Many early rear suspension designs included a shock absorber located between the rear frame and the seat post mounted in varying ways. Some rear suspensions also modified the conventional rear frame designs by utilizing additional frame members, or linking members between the conventional rear frame with the chain stays at the bottom of the seat tube and seat stays at an upper portion of the seat tube and the seat post. Some rear suspensions also modified the configuration of the seat tube.

The single pivot is the simplest type of rear suspension. The rear axle is held by a swingarm which is connected to the frame via a single pivot located on the bottom tube near the bottom bracket shell. When the suspension moves through its travel, the path the rear axle describes is a circle around the single pivot point. The rear triangle may simply be the swingarm. The rear shock may also be attached between the seat tube and the swingarm. This configuration of the single pivot design allows for a fairly linear leverage ratio between wheel travel and shock absorber travel. The main advantage of the single pivot design is its simplicity. It has few moving parts, few pivot points, is relatively easy to design and has good small bump compliance. Challenges with this single pivot design are brake jack and chain growth. Pedal induced forces and rider bobbing can rob the system of efficiency. Due to the limited power output of a human on a bicycle any lack of efficiency is undesirable. Some of these designs are heavy and tend to bounce up and down while a rider pedals. This movement takes power out of a rider's pedal stroke, especially during climbs.

Input from hard braking efforts also negatively affects full suspension designs. When a rider applies the brakes, some of these suspensions compress into their travel and lose some of their ability to absorb bumps. This may happen in situations where the rear suspension is needed most. When braking efforts cause the suspension to compress it is referred to as brake squat, when braking causes the suspension to extend it is called brake jack.

Some rear suspensions were designed to overcome or mitigate the above problems. One variation of single pivot suspension places the pivot in front of and above the bottom bracket, at a height above the smallest chain ring or higher. This gives the design a significant amount of anti-squat when pedaling in smaller chain rings, which helps reduce loss of energy due to squat. This is particularly of importance on steep climbs, when one would use the smaller chain rings. However, this is a trade-off since the pivot's placement causes the design to suffer more from pedal kickback.

Another variation on the single pivot design is the split pivot design. The split pivot design is a special case of linkage driven single pivot in which one of the four-bar's pivot points coincides with the rear axle. This allows for the disc brake caliper to be mounted on the floating linkage instead of on the swingarm. As a result of this the braking torque now interacts with the suspension via the floating linkage. The linkages can be designed such that this has a positive effect on suspension performance under braking, typically reducing brake jack. Furthermore, the relative rotation between brake disc and brake caliper as the suspension goes through its travel is different from that in single pivot designs. The four linkages in a split pivot design influence how braking torque is transmitted, how the brake caliper moves in relation to the disc and influence the leverage ratio between wheel travel and shock travel. Since these influences may have a different optimum linkage design, the bike's design has to strike a balance.

Other suspension designs rely on the shock absorber design to reduce pedal-induced bobbing and squat. There are many additional rear suspension designs in the prior art. However, a need exists in the art for further improvements of bicycle rear suspension systems to further improve the performance of the rear suspension under braking, acceleration, and further improved anti-squat anti-dive characteristics without complicating trade-offs in performance.

Further information pertaining to the prior art can be found in WO 2012/024697 that discloses a bicycle that includes a frame having a longitudinal axis, a first member, and a first pivot link assembly including a first link configured to rotate around a first pivot point. The first pivot point may have a first axis of rotation that is non-orthogonal to the longitudinal axis of the first frame, and the first frame may be coupled with the first member through the first pivot link assembly. It also teaches examples including a second pivot link assembly including a second link configured to rotate around a second pivot point having an axis of rotation that is non-orthogonal to the longitudinal axis of the frame.

US patent 6,361,059 discloses a single pivot shock absorbing wheel suspension system that includes a seat stay and chain stay attached at their rearward ends to a rear wheel axle, and attached at their forward ends to a linkage assembly. The linkage assembly is formed from a single piece of material and generally has an elongated body with attachment elements to attach the forward ends of the seat stay and chain stay. The linkage assembly constitutes a lightweight device that resists torsional forces occurring on the suspension system, and permits optimal alignment of the pivot point and the average chain line to improve bicycle performance.

FR 2 898 578 discloses a system having a swing arm connected to a frame, and a vibration damper with ends respectively connected to the frame and the arm. A transmission chain extends between a drive pinion and a driven pinion connected to an axle of a hub and transmits torque to a rear wheel. The arm pivots around a center of rotation when the hub is displaced on both sides of its reference position corresponding to a position of the hub axle, when the vehicle is in static equilibrium position, where a trajectory of the center of rotation is extended behind the axle.

### SUMMARY OF THE INVENTION

The present invention solves the above need in the art with a linked suspension system that maintains efficient operation while dealing with suspension loads, drive-train loads, and braking loads and combinations of such loads. In some preferred embodiments, the instant center of rotation is maintained rearward of the front frame of the vehicle. Some embodiments channel the drive-train loads primarily through one link of the system. Some embodiments maintain either tension or compression in a link with all three types of loads. The system is usable on most any type of ground-engaging vehicle to improve the suspension action. Thus, the shocks and springs of the suspension do not have to be as specially designed and tuned to deal with pedal-induced forces, braking forces, rider bob, and other inputs. The suspension linkage design itself cancels or counters much of the undesirable energy and control-robbing movements.

The present invention provides a vehicle in accordance with independent claim 1. Preferred embodiments of the invention are reflected in the dependent claims.

The claimed invention can be better understood in view of the embodiments described and illustrated in the present disclosure, *viz*. in the present specification and drawings. In general, the present disclosure reflects preferred embodiments of the invention. The attentive reader will note, however, that some aspects of the disclosed embodiments extend beyond the scope of the claims. To the respect that the disclosed embodiments indeed extend beyond the scope of the claims, the disclosed embodiments are to be considered supplementary background information and do not constitute definitions of the invention *per se.*

The present invention provides a vehicle that comprises a front structure, a rear structure, a drivetrain that induces a drivetrain force between the front and the rear structures when the vehicle is under acceleration, and a motion-control system comprising: a first member coupling the front and the rear structures at coupling locations; and a second member coupling the front and the rear structures, wherein the first member is positioned above the second member, said second member guides the front and the rear structures throughout a range of relative motion, said drivetrain force is a chain force, and said first member is situated and oriented relative to said drivetrain force such that a suspension of the vehicle does not travel substantially or induce a substantial compression cycle due to the drivetrain force, wherein the first member transmits at least 75% of the drive train force.

According to a preferable embodiment, the first and the second members are configured and arranged such that the second member guides the front and the rear structures throughout a range of relative motion between the front and the rear structures such that the line between the coupling locations remains substantially aligned with and transmits a majority of the drivetrain force throughout a substantial range of the relative motion between the structures.

According to another preferable embodiment, the first and the second members are further configured and arranged such that the majority of the transmitted drivetrain force subjects the first member to a first amount of tension, and when at least one of a braking force and a terrain-induced force are applied to the vehicle, the first member is subjected to a second amount of tension, wherein the second amount of tension is greater than or equal to the first amount of tension.

Preferably, the first member is subjected to tension throughout the range of relative motion.

Preferably, the second member is a slide link and the slide link is pivotally secured to one of the front structure and the rear structure and rotationally fixed to the other of the rear structure and the front structure.

Preferably, the second member, or a coupling location includes a cam unit device.

In another preferable embodiment, at least one of the first or the second member is pivotally secured to a spring unit that is pivotally secured to at least one of the front structure or the rear structure.

In another preferable embodiment, the front structure is coupled to the rear structure by a spring unit.

In another preferable embodiment, the second member is a slide link, the front structure further comprises a bottom bracket shell, and the second member is pivotally secured to the front structure adjacent the bottom bracket shell.

In another preferable embodiment, the first member, under a drivetrain load, is subjected to exclusively one of tension and compression throughout the range of relative motion.

In another preferable embodiment, the front structure further comprises a bottom bracket shell, the second member is a slider / cylinder of a slider-cylinder arrangement, and the second member is pivotally secured to the front structure at the bottom bracket shell.

In another preferable embodiment, a portion of the rear structure constitutes the other, cylinder / slider, of the slider-cylinder arrangement.

### BRIEF DESCRIPTION OF THE DRAWINGS

Preferred and alternative examples of the present invention are described in detail below with reference to the following drawings:
Figure 1 illustrates an isometric view of a bicycle having a rear suspension according to an embodiment that does not form part of the present invention but represents background art that is useful for understanding the invention;
Figure 2 is an isometric view of a frameset according to one embodiment that does not form part of the invention but represents background art that is useful for understanding the invention;
Figure 3 is a partially exploded isometric view of the frameset of Figure 2;
Figure 4 is a side-elevational view of the frameset of Figure 2 showing the range of movement of the rear suspension;
Figure 5A is a side-elevational view of the frameset of Figure 2 showing the chain tension angles under low gearing combinations relative to the suspension components;
Figure 5B is a side-elevational view of the frameset of Figure 2 showing the chain tension angles under intermediate gearing combinations relative to the suspension components;
Figure 5C is a side-elevational view of the frameset of Figure 2 showing the chain tension angles under high gearing combinations relative to the suspension components;
Figure 6 is an elevational view of the slider link of one embodiment that does not form part of the present invention but represents background art that is useful for understanding the invention;
Figure 7 illustrates chain tension vectors at different gearing combinations relative to the control arm pivots of one preferred embodiment that does not form part of the present invention but represents background art that is useful for understanding the invention;
Figure 8A illustrates the effect of slider orientation and control arm link orientation on vehicle squat (the figure does not form part of the present invention but represents background art that is useful for understanding the invention);
Figure 8B resolves chain forces relative to the slider under compressed and extended suspension states (the figure does not form part of the present invention but represents background art that is useful for understanding the invention);
Figure 8C diagrams vehicle squat conditions at rider sag of the suspension (the figure does not form part of the present invention but represents background art that is useful for understanding the invention);
Figure 9A is a side-elevational view of an alternate embodiment of the rear suspension having a control arm link pivot on the side of the slider (the embodiment does not form part of the present invention but represents background art that is useful for understanding the invention);
Figure 9B is a simplified view of the suspension of Figure 9A showing potential alternate slider mount locations and link mount locations with the corresponding effect on the slider axis;
Figure 10A is a side-elevational view of an alternate rear linkage configuration that does not form part of the present invention but represents background art that is useful for understanding the invention;
Figure 10B is a side-elevational view of an alternate rear linkage configuration that does not form part of the present invention but represents background art that is useful for understanding the invention;
Figure 11 is a side-elevational view of an alternate rear linkage configuration that does not form part of the present invention but represents background art that is useful for understanding the invention;
Figure 12A shows the range of movement of a rear linkage arrangement similar to that of Figure 9A with and without an extended travel cam and clutch mechanism (the figure does not form part of the present invention but represents background art that is useful for understanding the invention);
Figures 12B-D provide schematic views of differing placements of the cam mechanism the figure does not form part of the present invention but represents background art that is useful for understanding the invention;
Figure 13A is a side-elevational view of an embodiment that does not form part of the present invention (but represents background art that is useful for understanding the invention) with an external spring and shock absorber unit;
Figure 13B is a view of the embodiment of Figure 13A showing range of movement of the rear triangle;
Figure 14A is a side-elevational view of another embodiment that does not form part of the present invention (but represents background art that is useful for understanding the invention) with an external spring and shock absorber unit;
Figure 14B is a view of the embodiment of Figure 14A showing range of movement of the rear triangle;
Figure 15 is a side-elevational view showing a somewhat schematic representation of a hydro-pneumatic shock and spring assembly used with a rear suspension configuration that does not form part of the present invention but represents background art that is useful for understanding the invention;
Figure 16A illustrates the use of a gearbox transmission between the bottom bracket and the front pivot of the control arm link (the figure does not form part of the present invention but represents background art that is useful for understanding the invention);
Figure 16B illustrates the use of a gearbox transmission along or in place of the control arm link (the figure does not form part of the present invention but represents background art that is useful for understanding the invention);
Figure 17B shows the vehicle squat conditions according to an embodiment of the present invention;

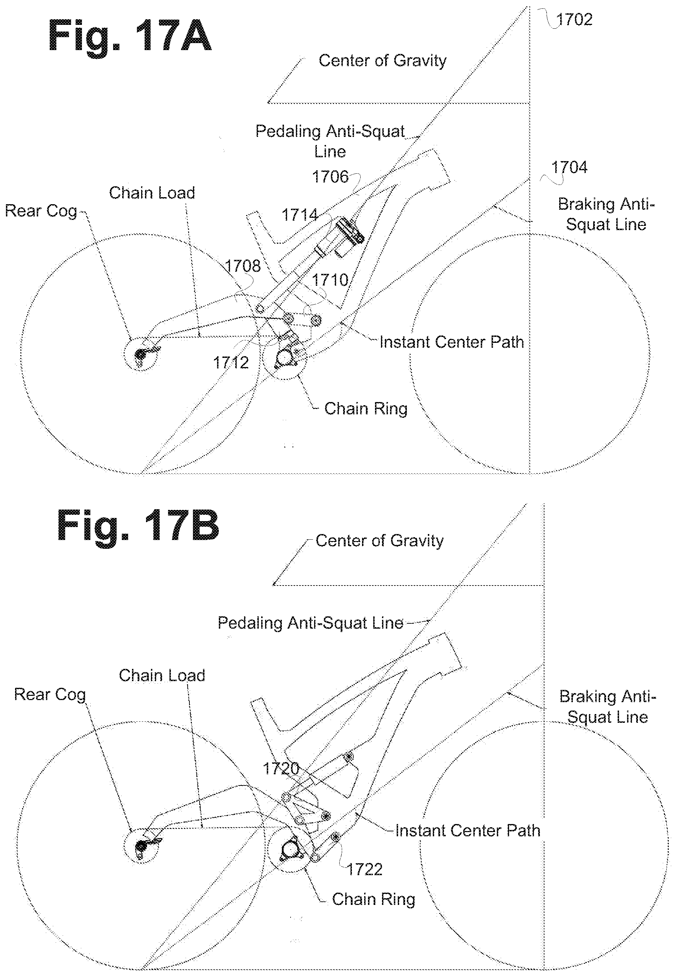

Figure 17A shows vehicle squat conditions according to another embodiment of the present invention;

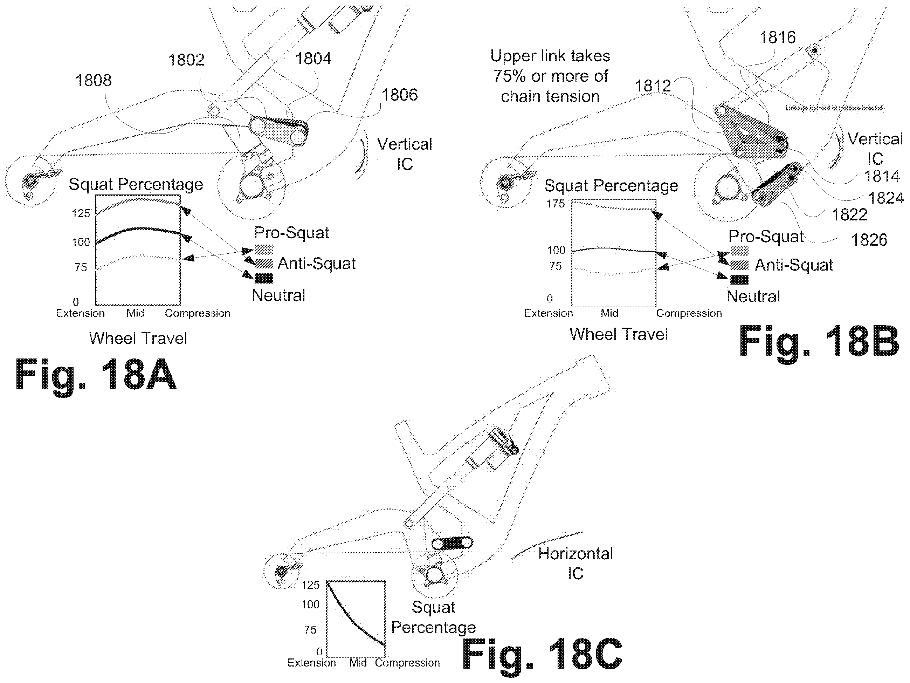

Figure 18A shows a bicycle with a variable slider 4-bar suspension system consistent with various embodiments disclosed herein;
Figure 18B shows a bicycle with a variable rigid 4-bar suspension system consistent with various embodiments disclosed herein;
Figure 18C shows a bicycle with a slider 4-bar suspension system consistent with various embodiments disclosed herein;

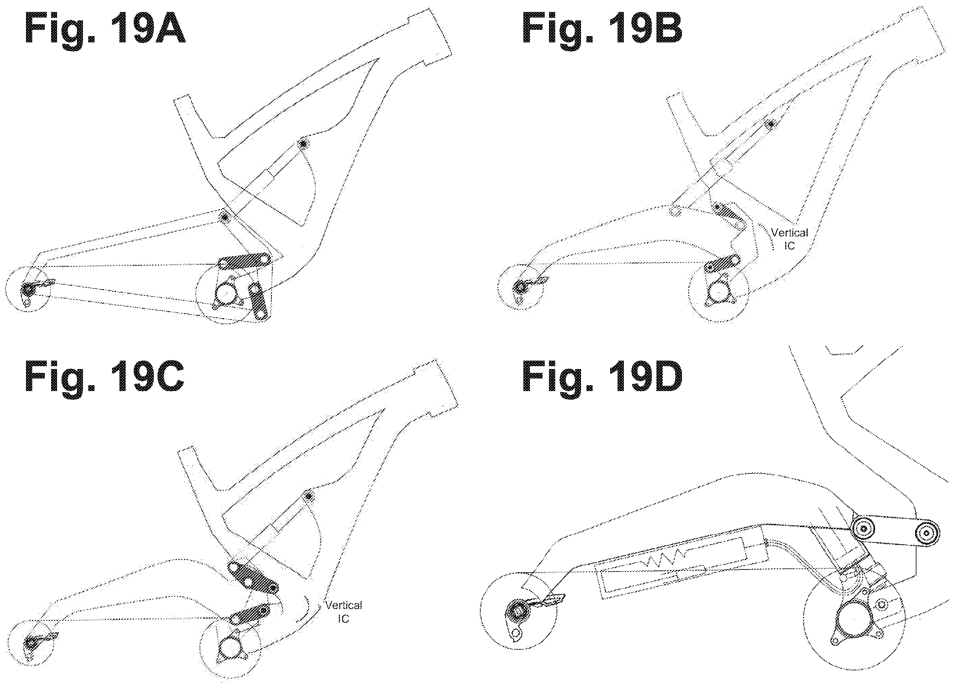

Figure 19A shows a bicycle with a rigid 4-bar suspension with an upper primary link under tension;
Figure 19B shows a bicycle with a rigid 4-bar suspension with a lower primary link under tension;
Figure 19C shows a bicycle with a rigid 4-bar suspension with a lower primary link under compression;
Figure 19D shows a bicycle with a slider 4-bar suspension with a lower primary link under tension;

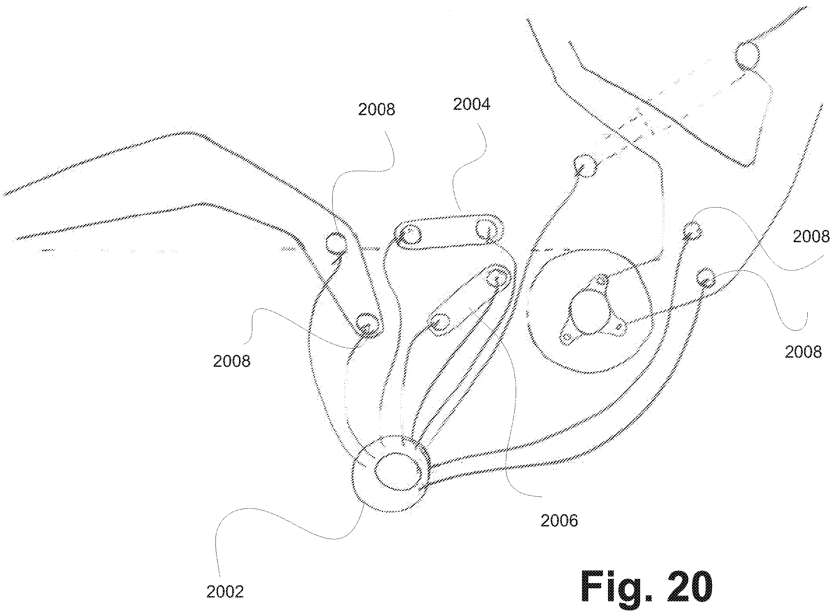

Figure 20 shows an exploded view of an embodiment that employs a cam device in at least one pivot location;

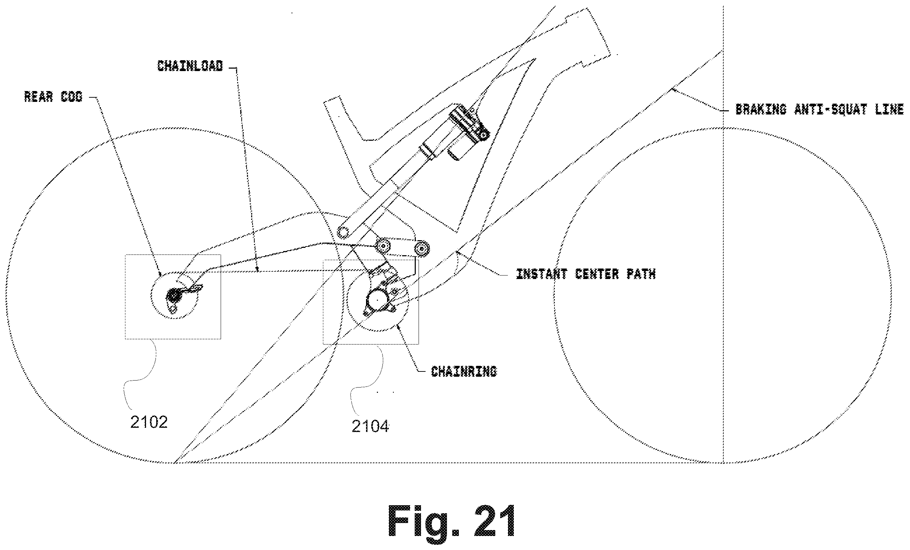

Figure 21 shows a bicycle with a slider 4-bar suspension consistent with various embodiments disclosed herein wherein the drivetrain includes at least one of a motor or engine;

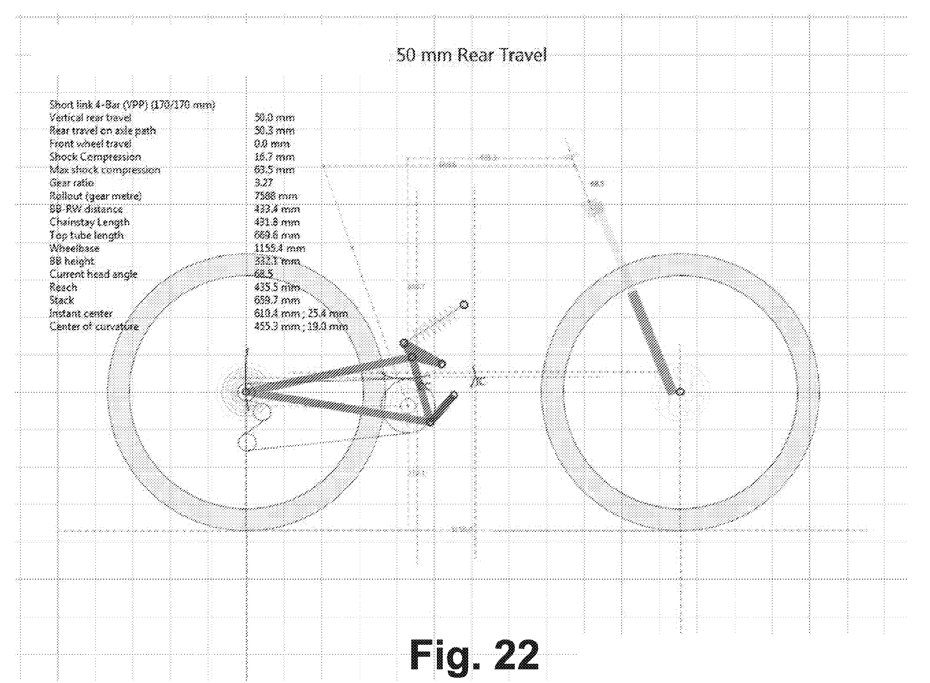

Figure 22 shows a bicycle with a rigid 4-bar suspension consistent with various embodiments disclosed herein where the motion-control system is enabled for 50 mm of travel;

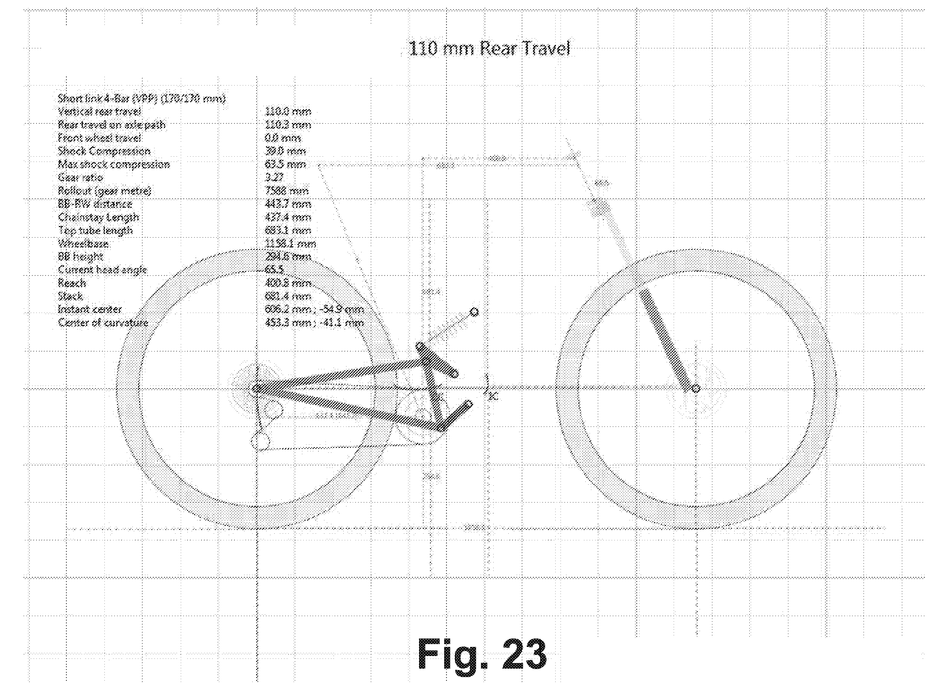

Figure 23 shows a bicycle with a rigid 4-bar suspension consistent with various embodiments disclosed herein where the motion-control system is enabled for 110 mm of travel;

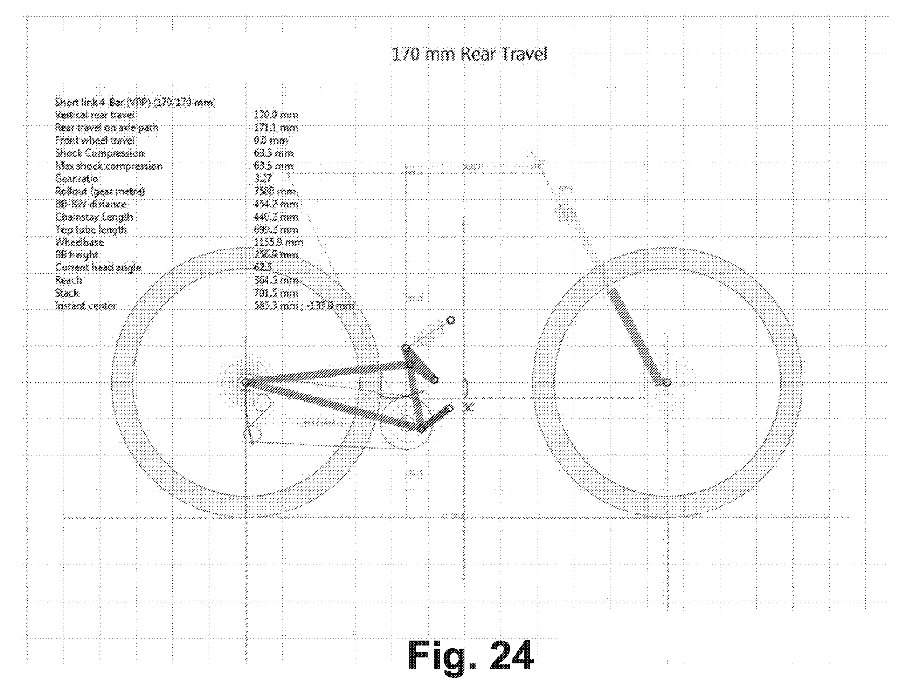

Figure 24 shows a bicycle with a rigid 4-bar suspension consistent with various embodiments disclosed herein where the motion-control system is enabled for 170 mm of travel; and

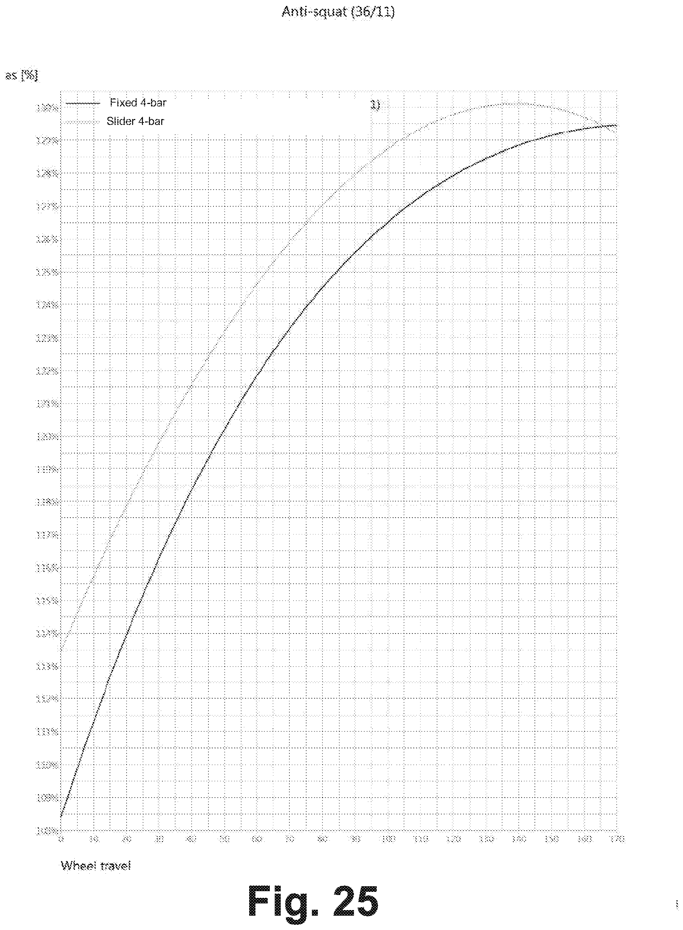

Figure 25 shows the anti-squat percentage, as a function of wheel travel, for a rigid 4-bar embodiment and for a sliding 4-bar embodiment.

### DETAILED DESCRIPTION OF THE PREFERRED EMBODIMENTS

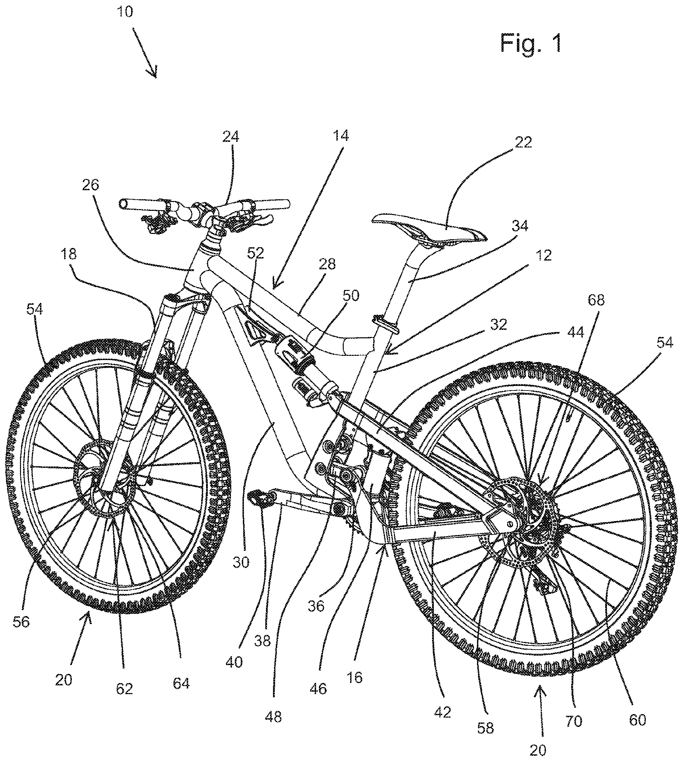

Figure 1 illustrates an isometric view of a bicycle 10. As with most conventional bicycles, the bicycle 10 includes a frame 12, a front triangle 14, a rear triangle 16, front forks 18, wheels 20, seat 22, and handlebars 24. The front triangle includes a head tube 26, a top tube 28, a down tube 30, and a seat tube 32. The top tube 28 extends between the seat tube 32 and the head tube 26. The down tube extends between the head tube 26 and the seat tube 32. This front triangle arrangement is used here as one preferred way of constructing a bicycle. However, alternate constructions may be used with the suspension of the present invention. For example a single enlarged down tube could take the place of the seat tube, the down tube, and the top tube.

The front triangle also secures the seat post 34 with the seat 22 mounted thereon. The seat post is secured to the top of the seat tube 32. The bottom bracket shell 36 is secured to the lower ends of the down tube and seat tube. In our present preferred configuration the seat tube 32 may be considered to intersect the down tube forward of the bottom bracket shell. Alternatively, the configuration may be described as the down tube 30 stopping before the bottom bracket shell with the seat tube extending rearwardly after it intersects the down tube 30. In any case, the bottom bracket is journalled within the bottom bracket shell 36, the cranks 38 being attached to the sides of the bottom bracket. The pedals 40 are secured to the ends of the cranks 38.

Likewise, with the rear triangle, certain configurations are shown and described herein. However, even as we discuss a "rear triangle" herein, the term should be interpreted more broadly to encompass any rear arm or set of rear arms that extend rearwardly to hold the rear wheel. Thus, a rear swingarm may essentially be the "rear triangle" herein in some embodiments. The rear triangle 16 in one preferred embodiment actually forms a triangle with chain stays 42, seat stays 44, and a slider link cylinder 46 forming the final side of the triangle. These three rigid members are rigidly secured to one another in this preferred embodiment. The seat stays 44 and the chain stays 42 are fixed to each other through the rear axle mount brackets 104 (in some forms referred to in the industry as "rear dropouts"). The brackets 104 have the rear wheel axle extending between them. A portion of the seat stays 44 forward of the rear wheel 20 is fastened to the top of the cylinder 46. Likewise, a forward portion of the chain stays 42 forward of the rear wheel 20 is fastened to a lower end of the cylinder 46. Thus, the three rigid elements form a triangle that is, in this embodiment, the rear triangle 16.

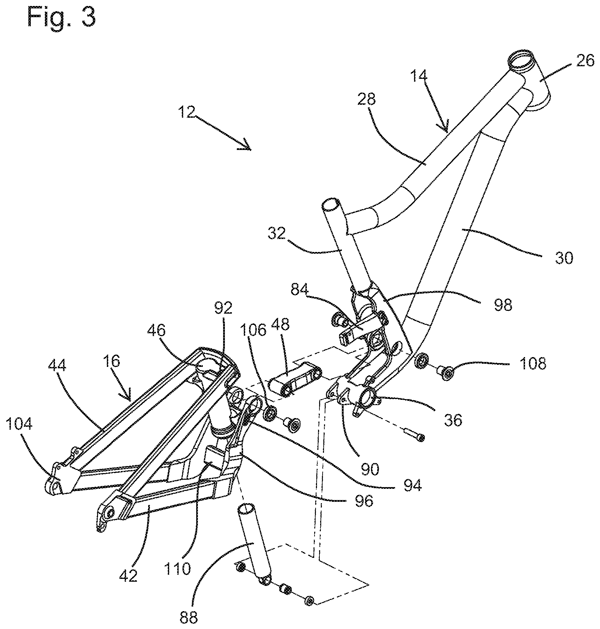

This rear triangle moves as one with rear suspension movement. Relative movement between the rear triangle 16 and the front triangle 14 is allowed to occur due to the linkage arrangement between these two "triangles." Obviously two of the links are the front and rear triangles themselves (or maybe more specifically, portions of the front and rear triangles: the cylinder 46 of the rear triangle and the seat tube-to-BB-shell portion of the front triangle). The third link in the four-bar linkage assembly is the control arm link 48. The fourth element (or "link") is the slider 88 (best viewed in Figure 3). The link is shown in Figure 1, extending between the forward arms of the chain stays 44 and a lower end of the seat tube 32 and pivoted on both ends. The slider 88 is hidden in the view of Figure 1 behind the forward arms of the chain stays. As seen in the exploded view of Figure 3, the slider 88 extends between the cylinder 46 (in which it slides) and a mount to the rear of the bottom bracket (BB) shell. The movement of the four element linkage configurations of the embodiments of the present invention will be described in more detail below.

The embodiment of Figure 1 employs a separate shock absorber and spring assembly 50. It is mounted to the front of seat stays 44 that, in this embodiment, extend forward of cylinder 46 around the sides of seat tube 32 to mount to the rear of shock 50. The forward end of shock 50 is secured to the down tube 30 with a shock mount bracket 52. The forward and rearward ends of shock 50 are pivotally secured such that it does not constrain the movement of the four-element linkage previously described. Shock 50 includes both a spring (preferably an internal air spring) and a damper (preferably hydraulic) all within the same assembly. Other springs and dampers may alternatively be used.

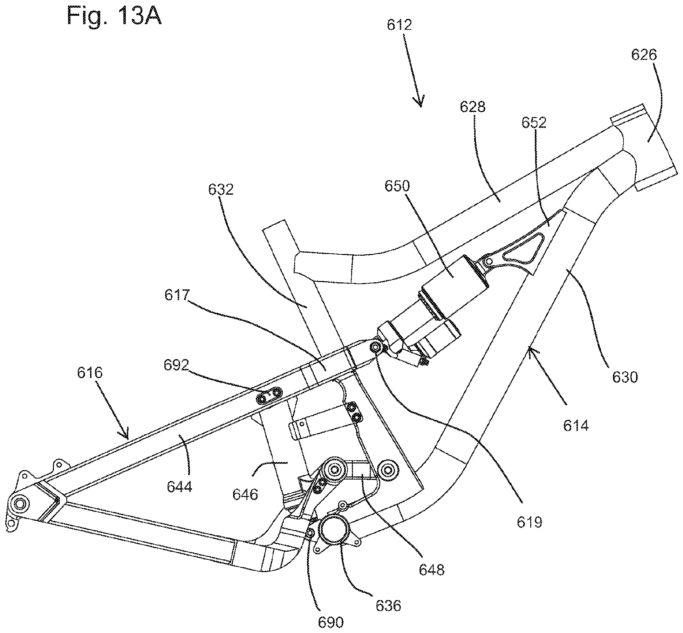

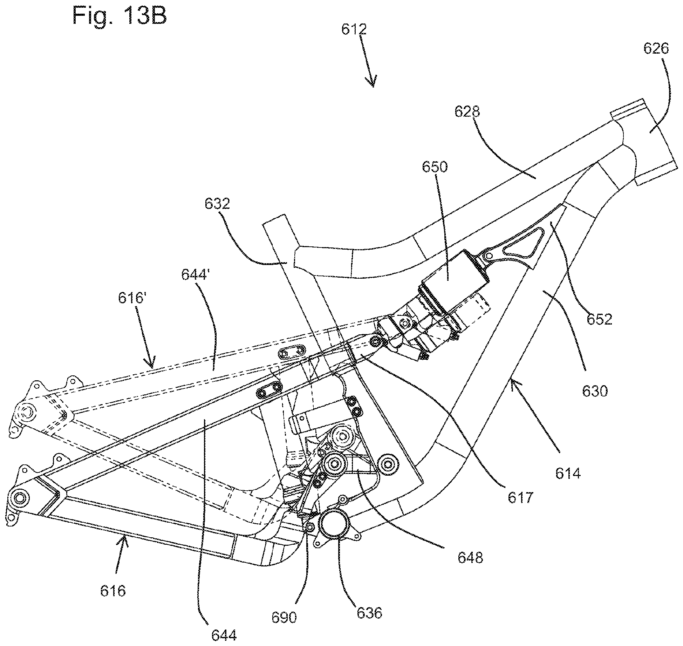

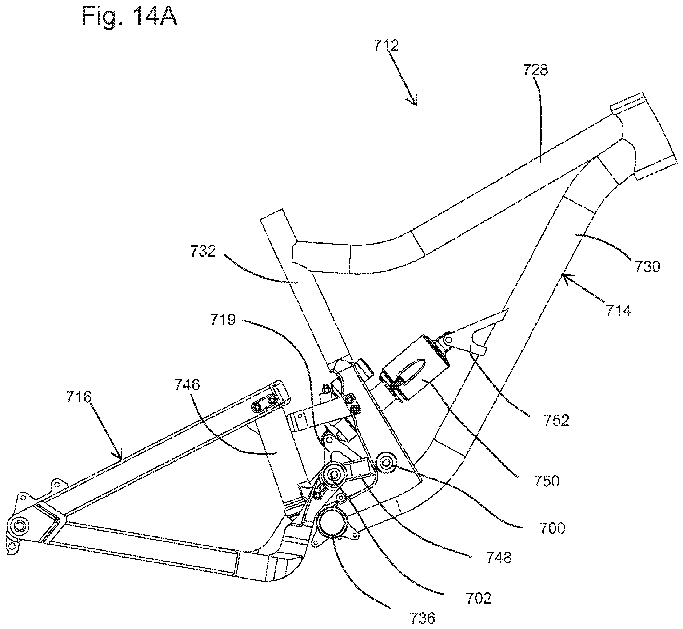

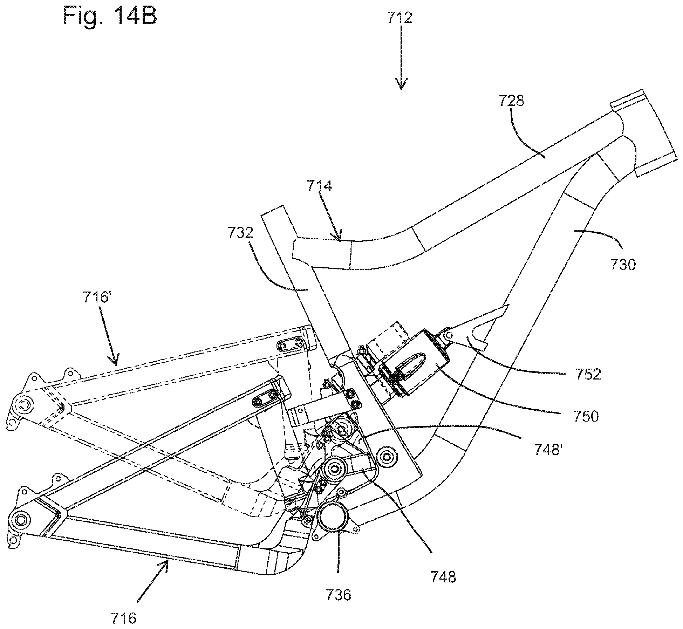

Note that the angle at which the shock 50 is mounted affects the effective spring rate of the system. So, for example, if the shock 50 is in line with the movement of the forward end the chain stays 44 where the shock's rearward end is mounted, the effective spring rate will be near the natural spring rate of the spring. However, if the movement of rear mount of the shock 50 becomes more out of alignment with the shock itself as the suspension compresses, the effective rate will be more regressive than the natural spring rate. Conversely, if the uncompressed alignment of the shock is far out of alignment with the movement of the shock's rear end mount, and the alignment increases with shock compression, the effective rate will be more progressive. Thus, the mounting configuration of the shock can be tailored to refine the suspension characteristics as desired based on the shock, the linkages, and the type of riding targeted. The mounts can also be configured to be changed by the user to tune the suspension to differing uses. Figures 13 and 14 illustrate these characteristics as well.

Figure 1 also illustrates some of the details of the wheel assemblies. Tires 54 are held on the rims. Spokes 60 extend from the rims to the front and rear hubs 56, 58. Front and rear axles extend through the hubs to rotatably secure the wheels to the front forks 18 and rear triangle 16. Front brakes 62 are secured between the front hub 56 and the forks 18. A front disc 64 is mounted to the front hub, while brake calipers (not shown) are mounted to the left fork leg. Likewise, the rear brakes 68 are secured between the rear hub 58 and the rear triangle 16. A rear disc 70 is secured to the hub to rotate therewith while brake calipers are secured to the left seat stay.

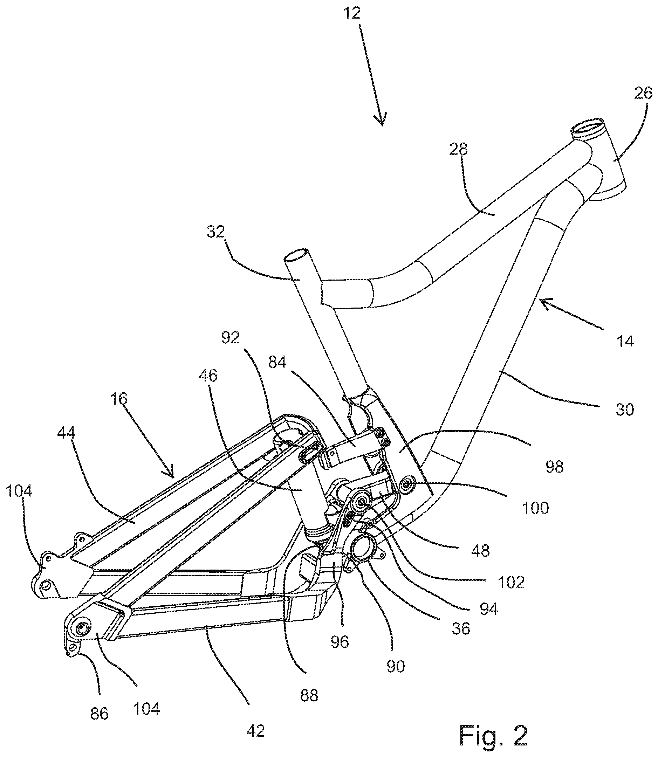

The drivetrain of the bicycle 10 is only partially seen in the view of Figure 1. However, it may be of conventional construction or employ non-conventional elements, some of which will be described below. The conventional construction includes front chain rings 74 and a rear cogset 76 (not well seen in Figure 1). A chain 78 (not shown in Figure 1) extends between the front chain rings and the rear cogset. Front and rear derailleurs are used to shift gears. The derailleurs are secured with hangers from the seat tube and from the rear mount brackets 104 (rear right dropout, see Figure 2).

Figures 2 and 3 illustrate a slightly different embodiment in that the spring and damper are contained in the cylinder 46. A slider 88 (Figure 3) is slidably received in the cylinder 46 to form a pull shock. In other words, as the suspension "compresses" (i.e., the rear wheel rises relative to the front triangle 14) the slider 88 extends further out of the cylinder 46. As seen in Figure 3, the lower end of the slider is pivotally mounted to a slider BB mount 90 on the rear of the BB shell. Thus, the slider does not translate relative to the front triangle 14. The slider translates relative to the cylinder 46 and the rear triangle 16 and slightly pivots relative to the front triangle 14 as the suspension moves.

The top of the cylinder 46 is rigidly fastened to the forward end of the seat stays 44 with an upper cylinder mount 92. In the preferred arrangement, bolts are placed through the forward end of the right seat stay and into threads in the mount 92 projecting laterally from the top of the cylinder. Alternatively, the other or both sides of the cylinder 46 are attached to the seat stays 44. A lower cylinder mount 94 preferably extends forward from the lower end of the cylinder 46. The lower mount 94 is secured between chain stay arms 96 that extend upwardly and forwardly beyond the lower end of slider 88. The shape of the arms 96 is dictated by packaging requirements to fit between the rear wheel and the BB shell 36 and to provide the desired geometry for the four-bar linkage assembly. Note that an arm brace 110 is also provided between the chain stay arms upper and lower ends, just rearward of the lower end of the slider 88.

As mentioned above, the slider 88 forms one link of the four- element linkage arrangement of the present invention. The other link is the control arm link 48. It extends between upper ends of the chain stay arms 96 and the lower end of the seat tube 32. The lower end of the seat tube 32 is formed into a lower channel 98 that has a "C" cross-sectional shape. This shape facilitates the mounting of the forward end of the control arm link 48. It also provides a convenient mounting location for the front derailleur hanger 84 above a forward link pivot 100. The rearward link pivot is at 102. The link pivots 100, 102 are secured with bushings 106 and fasteners 108 through apertures in the seat tube lower channel 98 and the upper ends of the chain stay arms 96. The locations of these pivots 100, 102 affect the suspension motion, as will be explained in more detail below.

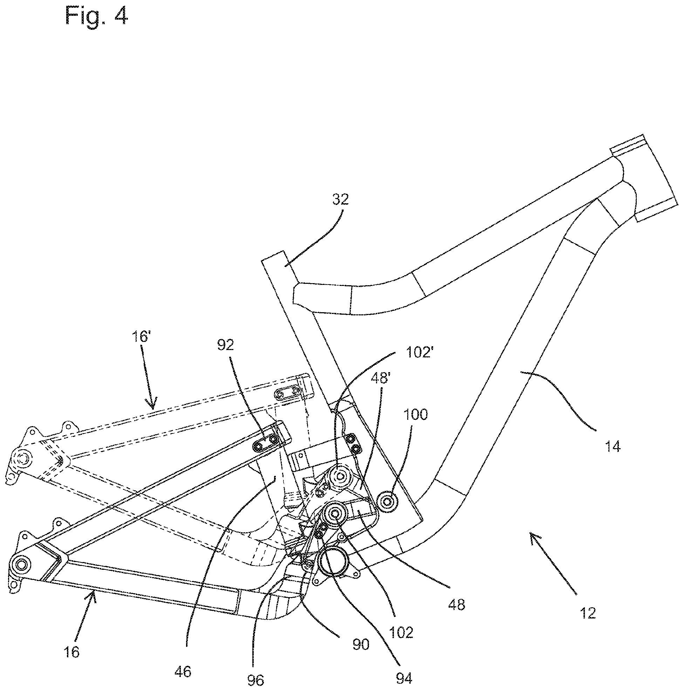

Figure 4 illustrates movement of the rear triangle 16 relative to the front triangle 14 along the path prescribed by the four-bar linkage discussed above. As the rear wheel is pushed upwardly relative to the rider and front triangle 14 (or conversely, as the rider pushes the front triangle down relative to the ground and the rear wheel), the rear triangle 16 moves relative to the front triangle 14. The movement is constrained by the two links connecting the front and rear triangles 14, 16, namely the slider 88 and the control arm link 48.

The slider 88 is pulled partially from within the cylinder 46 as the cylinder 46 travels upwardly relative to the slider BB mount 90 to which the slider lower end is pivotally secured. Thus, the slider/cylinder arrangement forms a pull shock. A spring (preferably an air spring) and damper is housed within the cylinder and is compressed by the slider 88 when it is pulled outwardly from the cylinder 46. The movement of the slider is translational relative to the cylinder 46 and entire rear triangle 16 and it is pivotal with regard to the BB mount 90 and the entire front triangle 14. The pivotal path is defined by the control arm link 48. Note as rear triangle 16 move to position 16', the control arm link moves to position 48'. In this position, the rearward link pivot 102 moves significantly upward and forward of its original location. Note that the axis of the cylinder rotates slightly forward from the non-compressed to the compressed state.

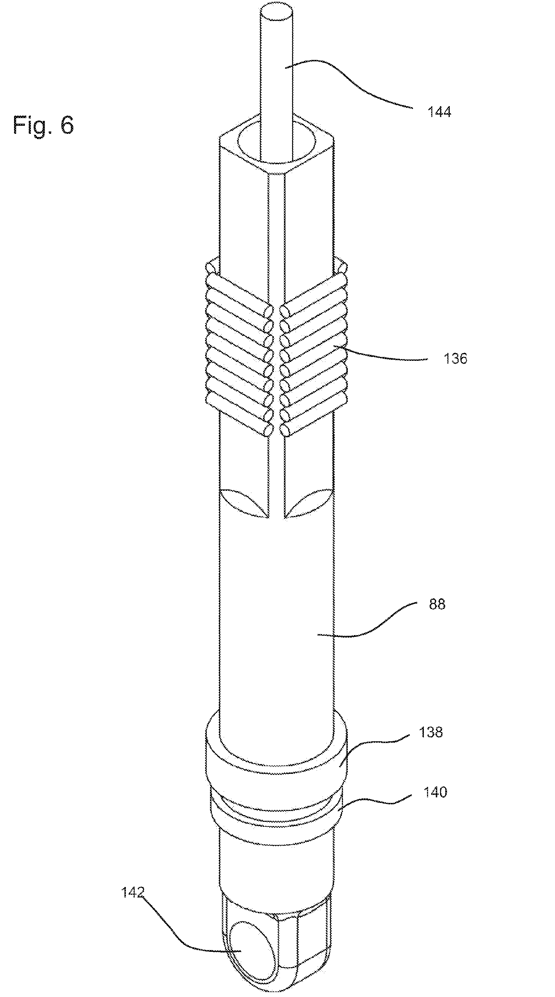

Before proceeding with further details of the linkage and its movement, some further understanding of the slider 88 will be explained in relation to Figure 6. The slider 88 includes needle bearings at its upper end to slide freely within cylinder 46 even under heavy fore and aft loads as the slider 88 is largely extended from the cylinder 46. At the suspension-compressed position of the rear triangle 16' (see Figure 4), the slider's needle bearings hold the alignment of the rear triangle 16' between them and the control arm link 48' with small "lever arm" between these two elements to counter the upward and rearward forces. The lower end of the slider 88 includes a bushing 138. The engagement of the bushing does not see as high of forces since it is closer to the lower end of the slider 88 and a slider mount fixture that is secured to the slider BB mount 90. A seal 140 is provided beneath the bushing 138 to contain fluid - potentially including air or hydraulic fluid.

Under certain arrangements, such as with an external shock 50 (as seen in Figures 1 and 13), the loads on the upper portion of the slider 88 are diminished, as they are transferred to the shock 50. In such instances, two (or more) bushings may be used within the slider instead of the needle bearings 136 and the single bushing 138.

The upper end of slider 88 includes a rod 144 that is part of the damping system with a piston on the lower end thereof (not shown) that may provide hydraulic damping of the shock. A spring, such as coil or pneumatic, is also housed within the slider or between the slider and the cylinder.

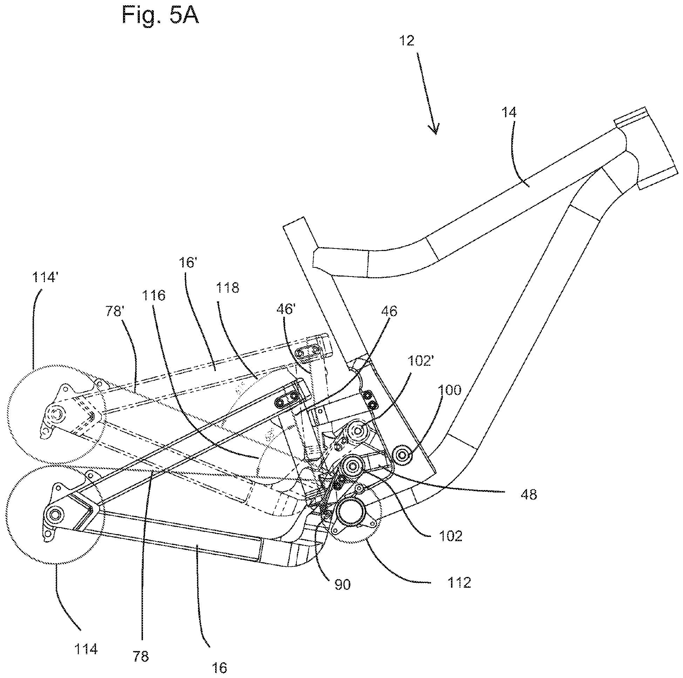

With a further understanding of the slider 88 and cylinder 46 arrangement in the four-bar linkage of the present invention, the movement and forces on the suspension system are better defined. Figures 5A-C illustrate the chain pull line relative to the slider 88 in the non-compressed and compressed states at various low/high and high/low gear combinations. Figure 5A shows a combination of a small front chain ring 112 with a large rear sprocket 114. This presents a typical climbing configuration for a mountain bike. When climbing, efficiency is important; any loss of energy is felt, whether it be pedal induced suspension squat, rider bob, or a too stiff suspension with reduced traction causing slippage. As can be seen in this figure, the angle between the slider 88 (or the axis of the cylinder 46) and the chain line 78 while on these gears creates an acute angle, preferably of about 68 degrees (first uncompressed pull angle). Thus, absent other considerations, the force of the chain tends to slightly pull the cylinder 46 down toward the BB mount 90. This slightly stiffens the suspension action, which may be desirable in climbing situations. However, note that the effect is somewhat slight, as the component of pull along the axis of the slider 88 would only be the cosine of the angle times the force of the chain. Thus, in this case, 37% of the force. This does not imply that 37% of the force is lost, to the contrary, this stiffening of the suspension reduces pedal-induced bobbing and maintains efficiencies while still allowing some suspension movement as necessary on bigger hits.

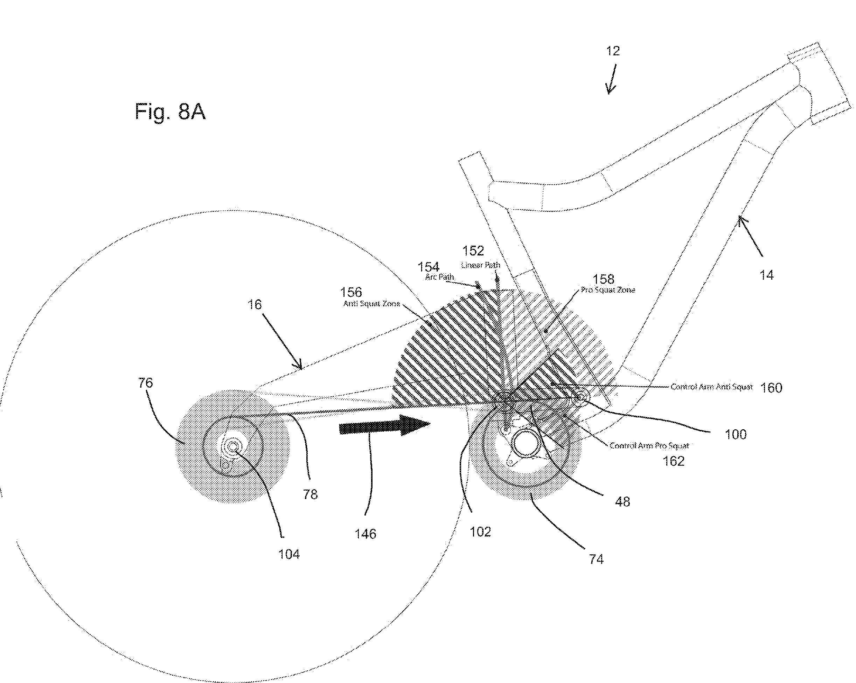

At full compression of the suspension with the rear triangle as shown in 16', the angle slightly decreases to 61 degrees (first compressed pull angle 118). Thus, the linkage arrangement provides a slightly progressive suspension - the more the suspension compresses, the stiffer it gets. So initial stroke allows the suspension to move over small bumps and hits, but as the stroke continues the pedaling effect on stiffening the suspension increases. Of course the angle of the cylinder 46 and slider 88 can be revised to provide more aggressive stiffening or lighter stiffening with suspension compression. In the case shown here, the effect is quite favorable compared to the prior art designs. The generally transverse orientation of the slide link (slider 88) relative to the chain pull, creates a system that is not much affected by pedal forces. The control arm link also comes into play in keeping the suspension from moving due to pedal/chain forces. That effect will be discussed further below in connection with Figure 8A.

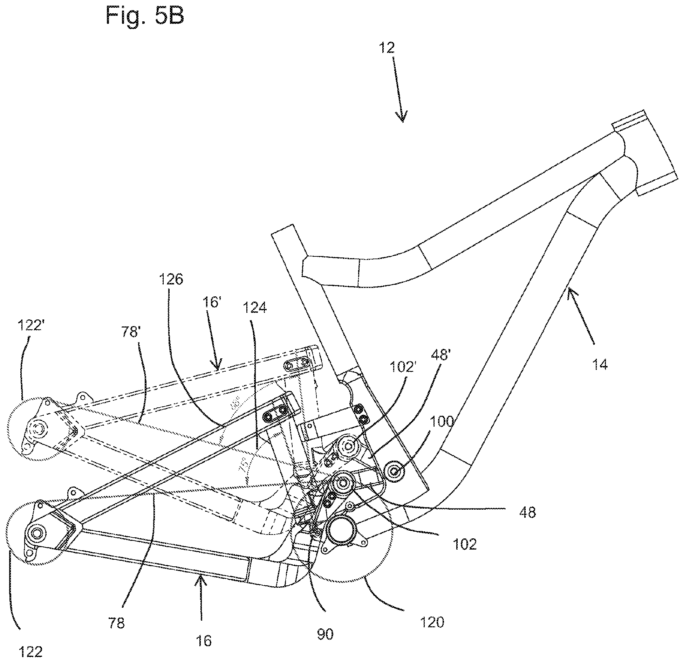

Moving to Figure 5B, with the chain engaging the middle chain ring 120 on the front and an intermediate rear sprocket 122 at the rear, the angles are greater relative to the arrangement from Figure 5A. Thus, in the situation where the rider is riding varied terrain - not a steep climb or a big descent - the suspension is only slightly stiffened by chain pull. The stiffening again increases (i.e., slightly progressive) with the compression of towards the state of 16' of the rear triangle. Thus, the suspension is active and useful in this gear range. The angles extend from 75 degrees (second uncompressed pull angle 124) to 68 degrees (second compressed pull angle 126).

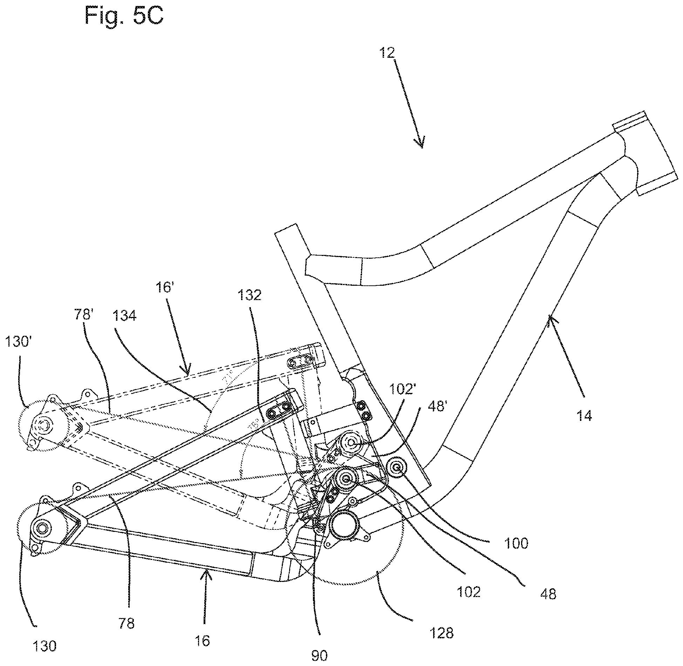

In Figure 5C, the large chain ring 128 is engaged on the front and the small rear sprocket is engaged on the rear. This provides the least leverage for the rider, but the most speed (assuming not too much resistance). This is downhill or at least flat-and-fast arrangement. Thus, the suspension is most fully active. With a third uncompressed pull angle of 78 degrees (132) and the line of chain pull 78 extending at or slightly over the forward and rearward pivot links 100, 102, the suspension can soak up the bumps mostly neutrally - without pedaling significantly affecting the suspension action. Even in the third, fully compressed pull angle 134, the angle is a large 71 degrees.

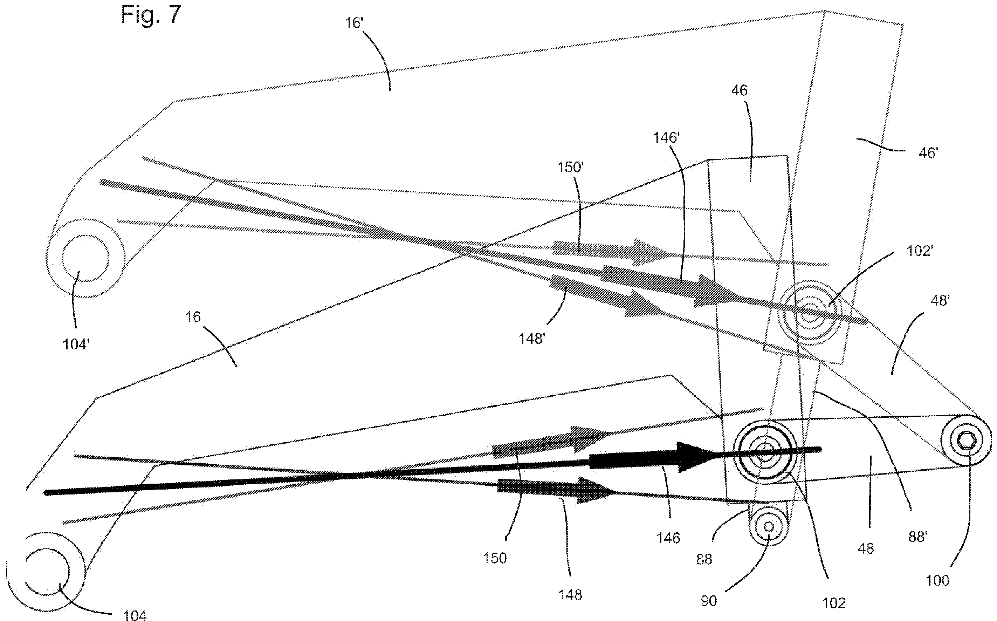

The chain-line forces and the interaction with the control arm link are shown in Figure 7. The rearward link pivot 102 is alternatively on the sides of the lower cylinder 46. However, this assessment applies as well to the arrangement specifically shown in Figures 5A-C above. Depending on the front and rear gears selected, the force vector of the chain proceeds through or above or below the rearward pivot 102. The orientation of the pivot in a compressed suspension state or an uncompressed state also affect the reaction the overall suspension system has to the chain forces. For example, while the angles discussed above with regard to the angle of the slider 88 relative to the chain pull may create a somewhat progressive suspension arrangement stiffening with increased suspension travel, the chain tension vectors geometry relative to the front and rear link pivots 100, 102 may accentuate or diminish the effects due to the angle of the slider 88.

As seen in Figure 7, the a middle/middle tension vector 146 is created with the chain following the middle chain ring on the front and an intermediate sprocket on the rear cogset. In the uncompressed arrangement, this vector intersects the rearward link pivot 102 as well as the forward link pivot 100, creating a neutral situation vis-à-vis the link 48. Or this will be nearly neutral as the alignment with rider sag and other factors may not align the pivots exactly. Design concerns may also dictate a desirability of not exactly aligning the vector with the pivots. This is discussed simply as one embodiment for consideration.

At the uncompressed state of the rear triangle 16, a small/large tension vector 148 is created with the chain on the small chain ring in the front and on a large sprocket on the rear cogset. In this situation, the tension vector 148 extends below the pivots 100, 102 to slightly stiffen the suspension with chain loading (i.e., pedaling). Conversely, in a large chain ring - small sprocket situation for fast riding (such as downhill), the large/small tension vector 150 is created extending above the pivots 100, 102. Thus, by configuring the geometries accordingly, plush suspension travel can be maintained for fast, bumpy descents.

In the compressed state of rear triangle 16', the vectors have the same orientation with regard to the rearward link pivot 102', but have a different position relative to the forward link pivot 100. The geometries may be configured to soften the suspension slightly for a more regressive setup. They may also be configured to counter a more progressive setup of the angle of the slider. Note that the vectors 146', 148', and 150' project above the forward link pivot location 100. This arrangement would tend to soften the suspension, (other factors being held constant), tending toward a regressive arrangement as the force vectors slightly push the link 48' upwardly and rearwardly relative to the forward pivot 100. Such a regressive arrangement may be desirable to absorb big terrain hits, while providing an initially stiffer suspension that is not as affected by pedaling forces and rider bobbing.

Thus, the angles of the slider 88 and the control arm link 48 interplay with one another and with the front and rear triangles 14, 16 to provide distinct suspension characteristics. Figure 8A helps define the parameters. With regard to the angle of the slider 88, depending on the gear combination selection (large, intermediate, or small front chain ring combined with large, intermediate, or small rear sprocket) an anti-squat 156 or pro-squat 158 configuration can be had. Generally, angling the slider 88 back towards the rear creates a more anti-squat configuration since the chain forces tend to hold the cylinder 46 down on the slider 88 due to chain tension. Angling the slider 88 forward creates a more pro-squat configuration since the chain forces then tend to pull the slider 88 from the cylinder 46.

The path of slider 88 need not be linear as shown at 152. The slider can follow an arcuate path, such as at 154 in Figure 8A. The path can be created to provide desired suspension characteristics. The slider itself can have a curve to it with a follower to create the arc path 154. Alternatively, the linkage (such as link 48) in combination with a straight slider can create a curved final path.

The anti-squat 160 and pro-squat 162 zones for the control arm link are also shown in Figure 8A. The control arm zones are shown independent of the slider zones. The interplay between the combination of zones can be used to create desired suspension characteristics. The control arm anti-squat zone 160 is created by moving the forward link pivot 100 above the chain tension vector 146 (assuming the rearward link pivot 102 is lower relative to the vector 146. The control arm pro-squat zone 162 is created by moving the forward link pivot down in its mounting location.

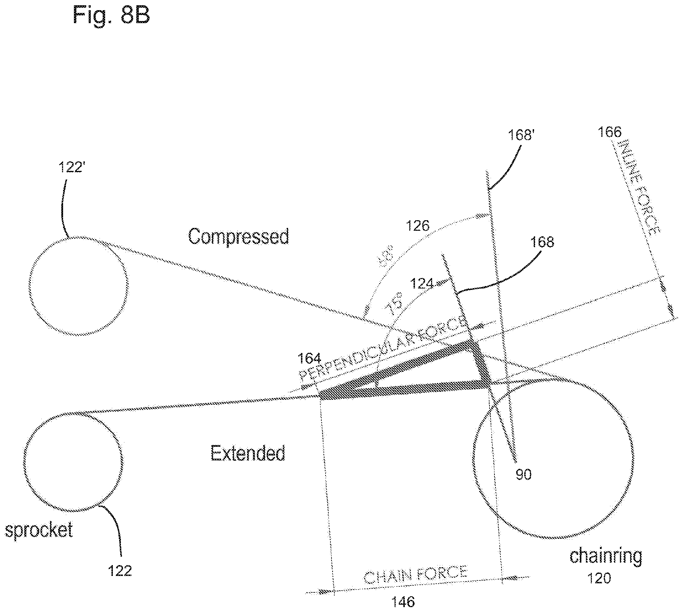

Figure 8B depicts the resolution of forces with regard to the slider 88 and the chain tension vector. As discussed above, the angles change depending on the front/rear gearing combination and on the amount of suspension compression of the rear triangle relative to the front triangle. The resultant inline force is the amount the slider is pushed into or pulled out of the cylinder to stiffen or soften the suspension. Of course, this is independent of other links and forces. The angle of the slider in the uncompressed and compressed states is shown at 168, 168'. The angles are shown at 124, 126. The chain force is shown at 146 with the perpendicular force of 164 and inline force of 166.

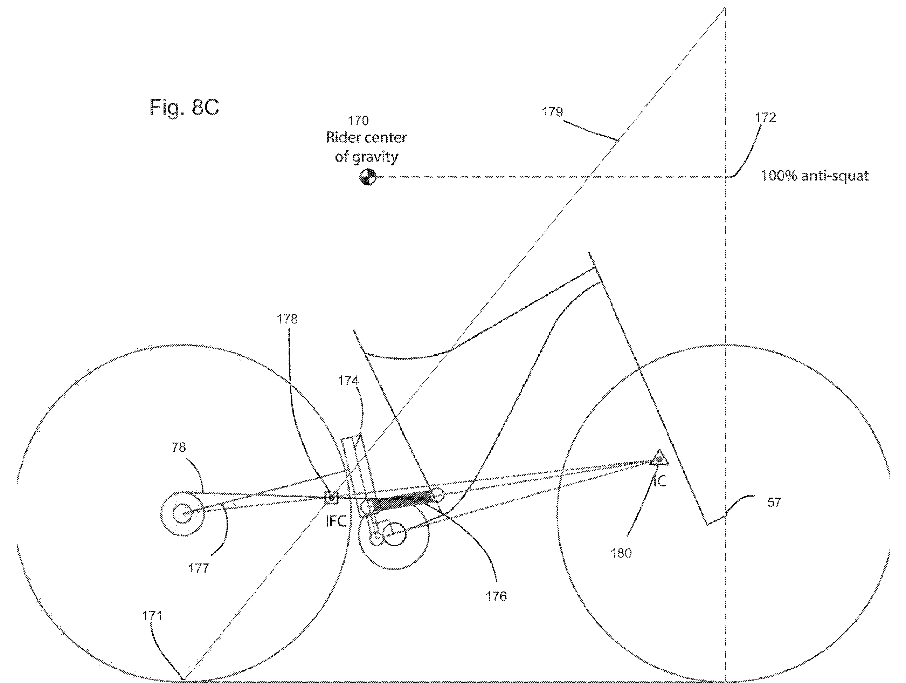

Figure 8C addresses the anti-squat issues based on the rear suspension at about 25% rider sag. The rider center of gravity 170 is above the bicycle. A line horizontal from the cg 170 intersects the vertical line from the front axle 57 (or tire contact with the ground) at 172 (i.e., the full neutral anti-squat position - 100% anti-squat). The longitudinal axle of the cylinder and slider is at 174. The control arm link is shown at 176. A perpendicular line from the axis of the slider to the rear axle is shown at 177. The intersection of the chain line with a line to the instant center of rotation is shown at 178. The intersection of this line with the axis of the control arm link 176 is shown at 180. Note that 178 represents the instant force center of the rear suspension under pedaling. The instant center of rotation with this rear suspension under braking is shown at 180. Line 179 helps determine tendency of the bicycle to squat under a pedal load. Line 179 extends from the rear-tire ground contact patch 171 through the instant force center 178. As this line 179 intersects the line between the rider center of gravity 170 and point 172, the pedaling forces result in rear anti-squat. If the line 179 were forward of point 172, pedaling forces would tend to induce squatting of the rear suspension.

Note relating to both pedaling and braking the configuration of the suspension of the bicycle can be changed to affect the location of the instant center of rotation and the instant force center. Changing these locations changes the squat characteristics of the suspension. For example, if the axis 174 of the slider is rotated the suspension may be pro-squat or anti-squat. The linear slide angle can be adjusted along with the link angle to finely tune the suspension over the full stroke of the suspension travel.

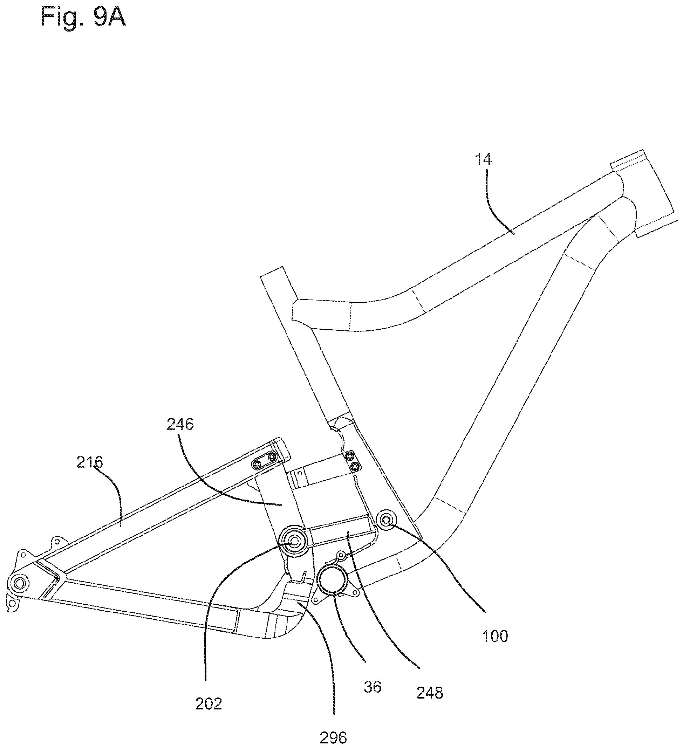

Other linkage dimensions and configurations are also possible based on the same concepts discussed above. Figure 9A shows a configuration with the control arm link 247 extending rearwardly to the intersect with the lower portion of the cylinder 246. In this embodiment, the front triangle 14 is essentially the same as previous embodiments. However, the control arm link 248 is longer and extends to a mount location to one or both sides of the cylinder 246. This changes the configuration of the chain stay arms 196 as well, as they do not have to project forward of the cylinder.

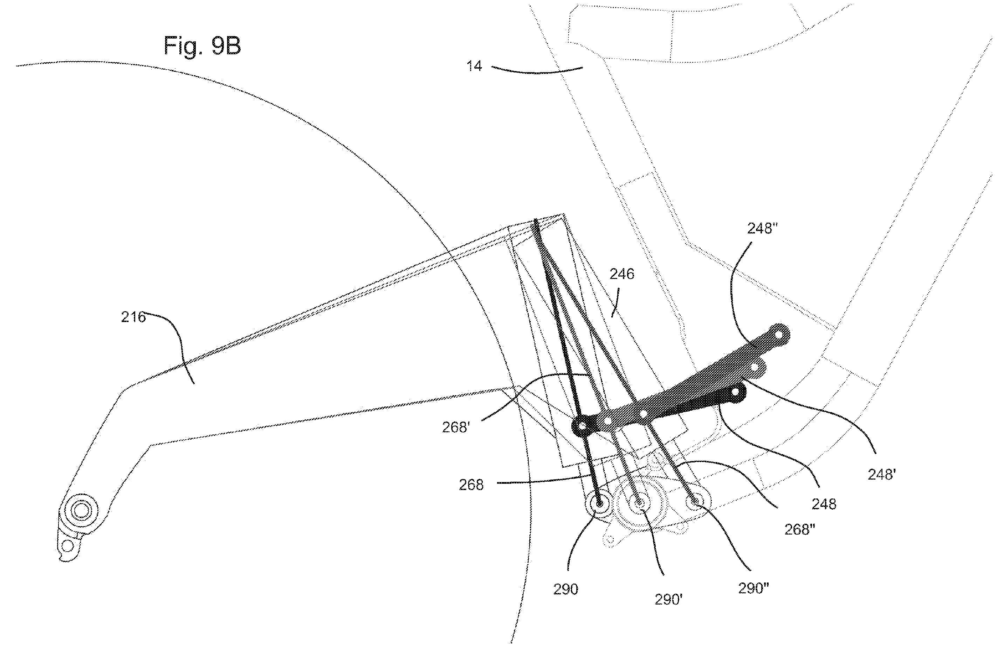

Figure 9B shows various mounting possibilities of the control arm link 248, 248', and 248". Consistent with different fore/aft and vertical mounting locations of the link 248, the slider BB mount 290, 290', 290" location can be varied to vary the characteristics of the suspension. For example, by placing the mounting location of the BB mount at 290' the slider angle shift back from 268 to 268'. Further repositioning of the BB mount at 290" further increases the rearward angle of the slider 268". Such mount locations may be desirable, for example, to stiffen the suspension when in small chain ring for climbing, as discussed above.

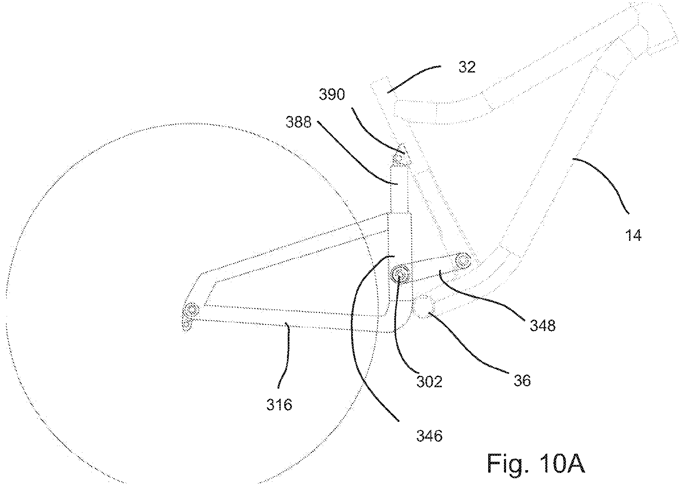

Figure 10A illustrates another change to the configuration that still falls within the concepts discussed herein. In this embodiment, the cylinder 346 and slider 388 are reversed such that the slider 388 exits the top of the cylinder 346 instead of the bottom. The slider 388 is pivotally secured to a slider mount bracket 390 on a upper portion of the seat tube 32. Instead of a pull shock the slider and cylinder assembly function as a compression shock with the slider entering further within the cylinder upon compression of the suspension. The control arm link 348 still completes the linkage to help control the movement of the rear triangle 316 relative to the front triangle 14.

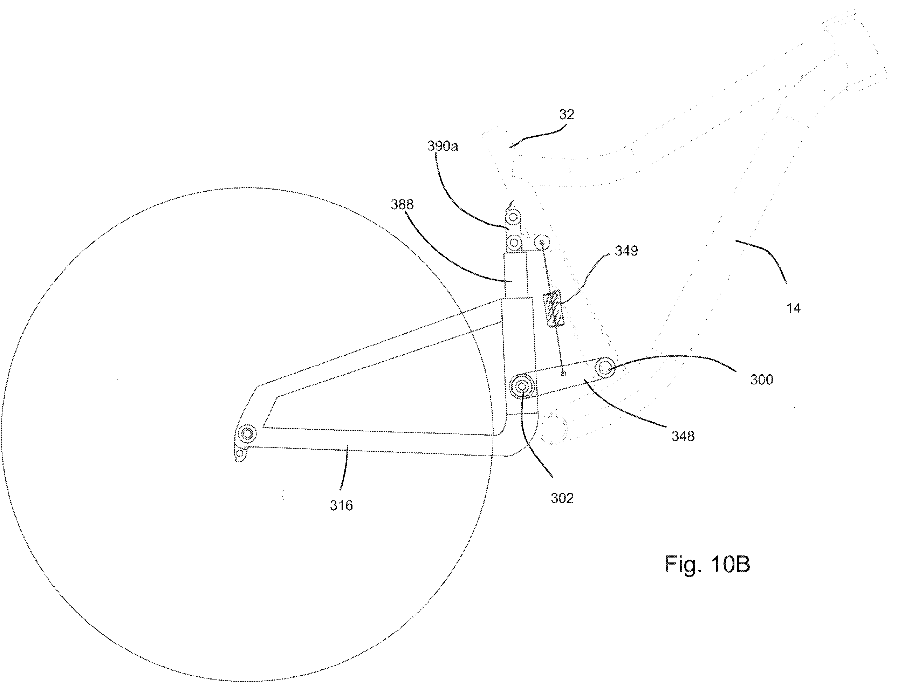

Figure 10B shows an embodiment similar to that of Figure 10A. However, in this embodiment, a constrained second link 390a is pivotally secured to the seat tube 32. The other end of the second link 390a is constrained by member 349. The slider 388 is pivotally attached between the two end connections (to the member 349 and to the seat tube 32. Member 349 extends from its connection with second link 390a and a connection to an intermediate portion of control arm link 348. Member 349 is preferably adjustable in length in order to generate various wheel path trajectories.

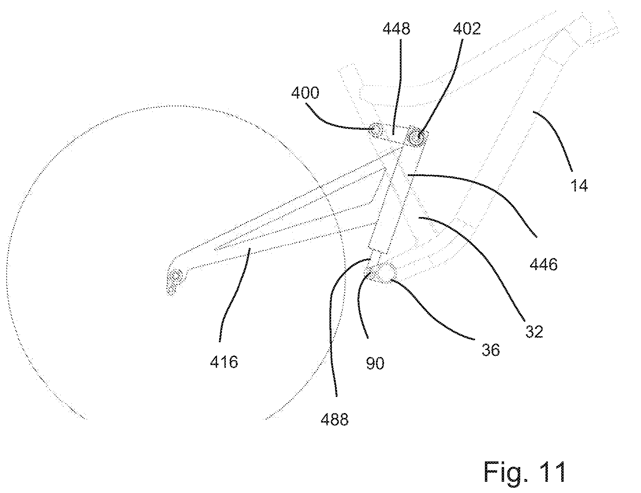

Figure 11 presents still another alternate embodiment. The bottom end of slider 488 is still secured to BB mount 90, however, the control arm link 448 is pivotally secured to the upper end of cylinder 446, between cylinder 446 and seat tube 32. A cylinder pivot 402 secures one end of the link 448 to the cylinder, while a seat tube pivot 400 secures the other end to the seat tube 32. As is evident in the figure, the angle of the slider 488 is tilted much more forward in this embodiment. Such an arrangement may have characteristics advantageous for certain types of bicycles and certain types of riding. Pedaling forces may tend to soften the suspension in this configuration.

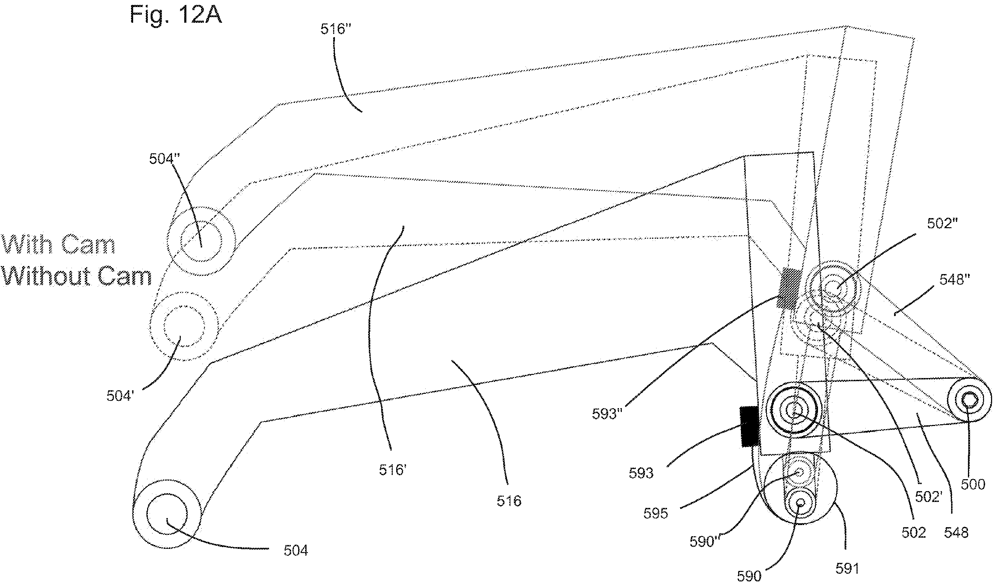

An additional feature that may be added to several of the embodiments herein is illustrated in Figures 12A-D. The outer end of the slider 588 or either end of the control arm link 548 may include a mount cam 591 securing the pivot. Thus, with regard to placing the cam on the slider BB mount 590, the cam provides extended travel for the rear triangle 516. The cam rotates about a transverse axis and is controlled by a cam clutch 593. The clutch 593 includes a clutch cable 595 extending therefrom that engages the cam 591. The clutch includes a clasp mechanism that secures the cable 595 under a predetermined acceleration, velocity, or position of the cable relative to the clutch (or of the acceleration, velocity, or position of the rear triangle relative to the front triangle). For example, a centrifugal clutch mechanism is responsive to acceleration and velocity to engage. Pawls or other mechanisms, even electronically controlled mechanisms may be used. Position sensitive switches may also be used to close the clasp mechanism on the cable to engage the clutch.

Upon engagement, the clutch 593 pulls the cable 595 to turn the cam 591 such that the pivot 590 is moved from its first, lower position to an upper position 590" that provides more suspension travel of the rear triangle 516. So in Figure 12A the movement of the rear triangle without the clutch engagement is shown at 516', while the full movement possible with the clutch turning the cam to a higher pivot location is shown at 516". With this cam system, a bicycle rear suspension can function well as a moderate suspension travel bicycle or as a large-travel suspension bicycle automatically when a big hit that introduces large acceleration, velocity, or displacement of the rear suspension. Thus, the advantages of a moderate travel suspension are realized while providing for big-hit capabilities.

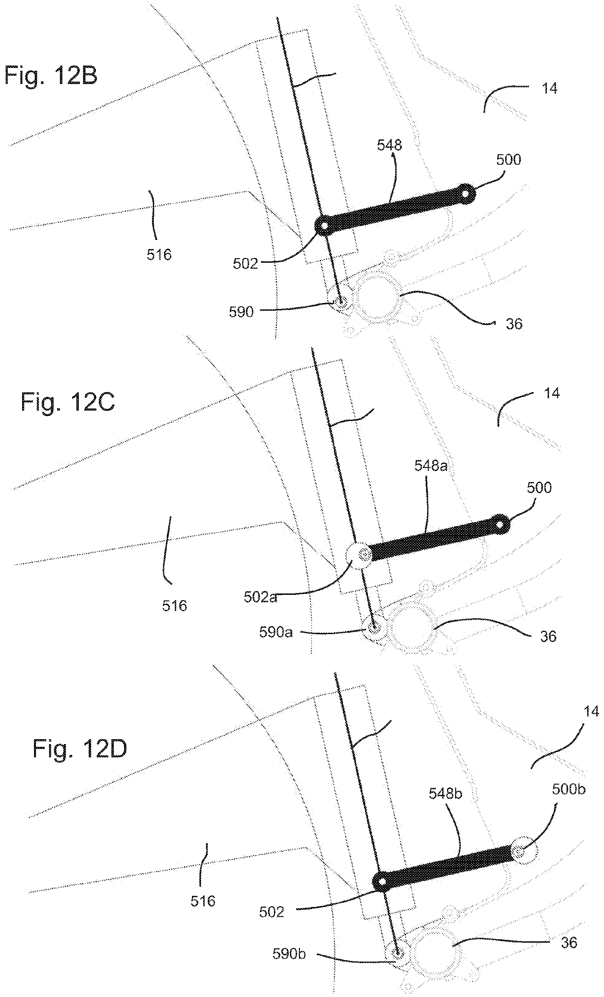

Figure 12B is a simplified schematic illustration of the cam system for comparison with placing the cam at the control link cylinder pivot location (Figure 12C) or at the seat stay pivot location (Figure 12D). As the link travels upwardly, the extended travel advantages are realized in these cam locations as well by essentially extending the link as needed based on the factors discussed above.

Figures 13A and B illustrate the alternate embodiment that is used on the bicycle of Figure 1. Instead of relying on the slider and cylinder 646 to provide the damping and spring forces, a separate shock 650 that includes a damper and spring is secured to the forward end of the chain stays 644. Shock mount arms 617 extend forward from the junction of the chain stays 644 with the top of cylinder 646. Arms 617 extend around one or both sides of seat tube 632 to a shock rear mount 619. Mount 619 is secured to the rear of shock 650, while the front of shock 650 is pivotally secured to shock front bracket 652, secured to a forward portion of down tube 630. Alternately the forward end of shock 650 could be secured to any portion of the front triangle 614, the top tube or even the seat tube with a pull shock or other arrangement.

As discussed above, the angle of the shock 650 can be modified by mounting to attain progressive, regressive, or neutral shock characteristics. Most air springs are quite progressive in nature such that a regressive mounting arrangement may reduce the severity of the progressive spring. Alternatively, a coil spring is typically linear in rate while a progressive rate may be desired and achieved with the mounting location interacting with the movement of the forward end of the mount arms based on the configuration of the four-bar linkage.

Figure 13B illustrates the movement of the rear triangle 616 to 616'. Note that the compression of the shock 650 is generally along its axis in this particular preferred mounting arrangement.

Another embodiment, also with a shock external to the cylinder, is shown in Figures 14A and B. In this embodiment the shock 750 is mounted 719 to the control arm link 748 between the rearward pivot 702 and the forward pivot 700. The shock body itself extends through the lower portion of the seat tube 732 above the forward pivot 700. Again, geometries can be arranged to achieve desired suspension characteristics. This arrangement has the advantages of being compact and having a low center of gravity.

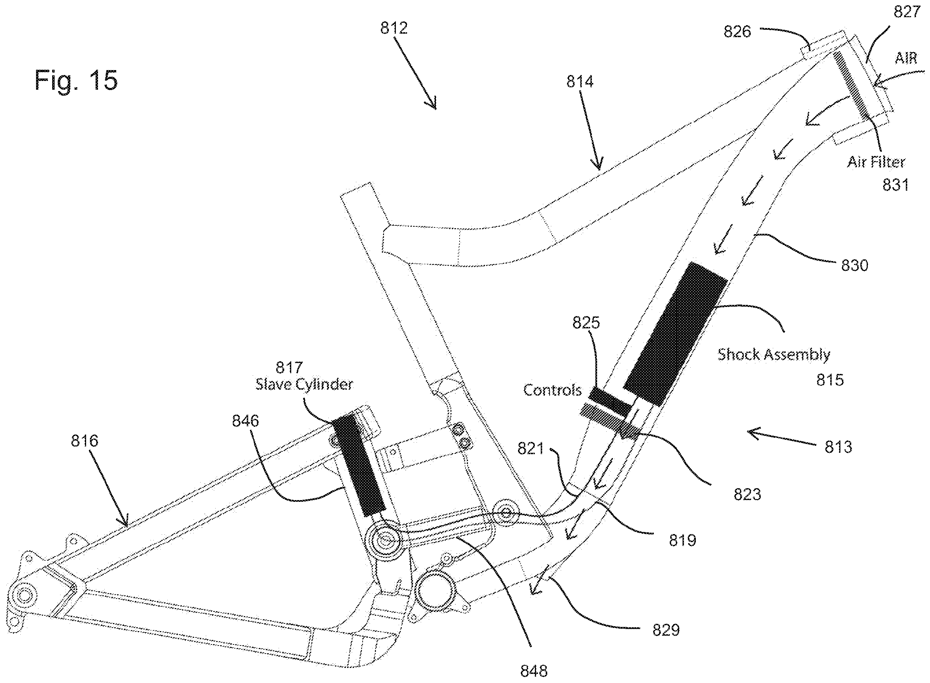

The hydro-pneumatic shock assembly 813 of Figure 15 can be used on any of the linkage geometries discussed herein. The assembly 813 includes a shock assembly 815 housed anywhere on the bike - preferably in the down tube 830 and a slave cylinder 817 providing the spring force and damping within the shock assembly secured to the rear triangle 816. Preferably the slave cylinder is within the pull shock arrangement housed by cylinder 846. However, the slave cylinder can be in any location to control spring and damping movement between the front and rear triangles, just as the external shocks discussed above are in various locations.

The shock assembly 815 includes send and receive fluid lines 823 and 821 for compression and rebound movement of fluids from the shock assembly 815 to the slave cylinder 817. Compression and rebound controls 823, 825 are in fluid communication with the send and receive (compression and rebound) fluid lines 823, 821. The shock assembly 815 preferably includes hydraulic fluid as well as a gas chamber (such as for nitrogen gas). The two areas are separated by a member such as a piston or bladder or both. The gas pressure in the shock assembly provides the spring force to feed to the slave cylinder through the hydraulic fluid, while the passage of the fluid through the controls provides damping. The controls 823, 825 can be mechanical or electro-mechanical.

A air cooling system is also provided with ambient air entering an air intake port 827 proximate the head tube 826. The air is channeled through the down tube 830 to cool the fluid in the shock assembly 815. The air exits at an air exit port at the lower end of the down tube 830. An air filter 831 may be provided at the air intake port. Cooling fins may extend from the shock assembly to speed heat transfer.

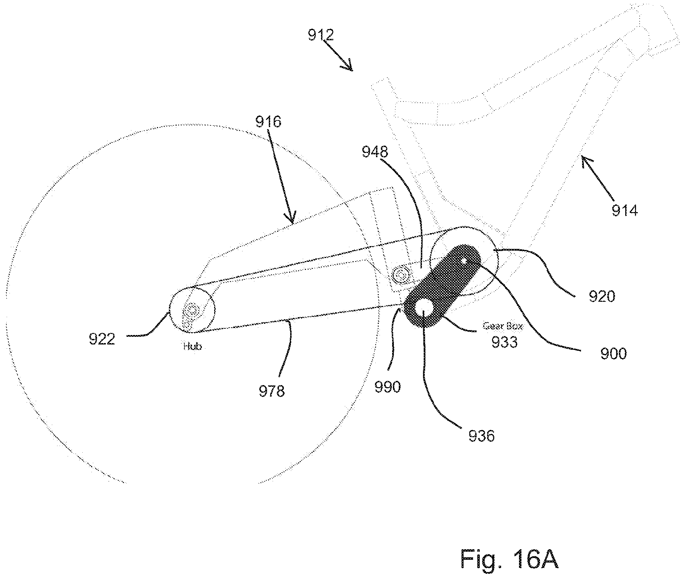

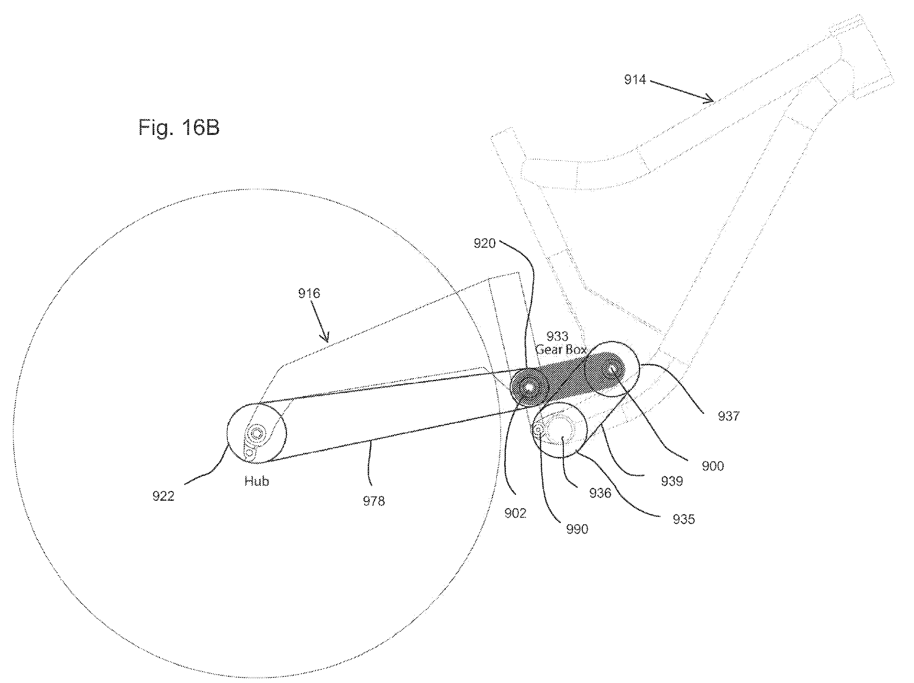

The embodiments of the present invention may also benefit from the addition of a gearbox 933 as shown in either of Figures 16A or 16B. In Figure 16A the gearbox 933 extends between the bottom bracket 936 to the forward pivot 900 of the control link. A driveline 978 extends between a front sprocket 920 and a rear sprocket 922. The gearbox may be as shown and described in U.S. Patent Publication No. 2006/0063624, published on March 23, 2006, the contents of which are hereby incorporated by reference.

The gearbox 933 may alternatively extend from the forward pivot 900 to the rearward pivot 902 either along or in place of the control arm link. In this embodiment, a drive sprocket 935 is driven from the bottom bracket 936 to a driven sprocket 937 with a drive belt 939. The gearbox 933 then transfers the power to the front sprocket 920 and through a chain 978 or some other drive line to the rear through another sprocket 922 or the like secured to the rear hub. The suspension linkage arrangements discussed herein can be applied as the example shown in the figure. In some embodiments, a gearbox may be an internal drivetrain.

Figure 17A shows vehicle squat conditions according to another embodiment of the present disclosure. The instant center of rotation of the rear vehicle structure 1708 (IC), the pedaling anti-squat point 1702, and the braking anti-squat point 1704 are determined with similar methods as discussed in the context of Figure 8C.

Figure 17A shows a vehicle with a front vehicle structure 1706 and a rear vehicle structure 1708 coupled by a primary link 1710 and a guide-supporting link 1712. In at least one of the various embodiments, at least one of primary link 1710 or guide-supporting link 1712 may be a member. In some embodiments, the primary link 1710 and the guide-supporting link 1712 may be vertically separated. The vehicle may include a four-element linkage as previously described. In some embodiments, a primary link may be a first link and a guide-supporting link may be a second link. In some embodiments, the front vehicle structure 1706 may be a frame, front triangle, or a chassis. In at least one embodiment, the front vehicle structure 1706 may include a fork, although the invention is not so constrained.

The rear vehicle structure 1708 may be a swing-arm or a rear triangle or other structure. In various embodiments, the primary link 1710 may be a control link, such as control link 48 from Figures 1, 2, and 3. As shown, guide-supporting link 1712 may include a slider link cylinder and a slider, such as slider link cylinder 46 and slider 88 of Figures 1, 2, and 3, although the invention is not so constrained.

In at least one embodiment, a spring and/or damping unit 1714 may also couple the front vehicle structure 1706 and the rear vehicle structure 1708. A spring unit may control compression, rebound, and spring rate. In some embodiments, a spring unit may control the capture and release rates of stored energy. In various embodiments, a spring and/or damping unit may be a shock. As previously described, at least one of the forward and rearward ends of spring/damping unit 1714 may be pivotally secured to the corresponding front vehicle structure 1706 and rear vehicle structure 1708 such that the spring damping unit 1714 does not constrain the movement of the four-element linkage.

In at least one embodiment, guide-supporting link 1712 may be pivotally coupled to the front vehicle structure 1706 in front of the vehicle's bottom bracket (BB). Figure 17A also shows a chain ring and a rear cog included with the vehicle. The primary link 1710 and the guide-supporting link 1712 can transmit forces, along each links primary axis, between the front vehicle structure 1706 and the rear vehicle structure 1708. When such forces are transmitted along the axis of a link, the link may be either under tension or compression.

When the vehicle is pedaled, the chain is under increased tension, as shown by the chain load in Figure 17A. Accordingly, a chain load or chain force vector lies in the direction of the chain and acts on the rear vehicle structure 1708. Because the front vehicle structure 1706 is exerting a force on the rear vehicle structure 1708 through the chain, the rear vehicle structure 1708 will exert a force on the front vehicle 1706 through the primary link 1710 and through the guide-supporting link 1712. In this way, the chain force may be transmitted through the links.

The chain force (or load vector) lies along the line connecting the rear cog and the chain ring. In some embodiments, the drivetrain force vector may lie along a portion of the chain in the drivetrain, such as the upper portion of the chain. In some embodiments, the drivetrain may include at motor or an engine. In at least one embodiment, the drivetrain may include an internal ratio transmission. In some embodiments, at least the primary link 1710 may be substantially aligned with the chain load force vector. For instance, an axis defined by constructing an imaginary line between each of the two coupling locations (or pivots) on the primary member (or link) 1710 is substantially aligned with the chain load force vector. In at least one embodiment, a vector between the coupling locations of primary link 1710 at the front 1706 and the rear structures 1708 may be substantially aligned with the drivetrain force. The drivetrain force induces a force of on the rear vehicle structure 1708 and/or at least one of the primary link 1710 or the guide-supporting link 1712. In at least one of the various embodiments, the primary link 1710, or the vector defined thereof, may be substantially aligned with the upper portion of the chain.

In regards to an alignment of a primary link with the chain force vector, a primary link may be substantially aligned with the drive force vector when it lies within a certain relative vertical separation from the drivetrain force vector and also within a relative angle to the drive force vector. For instance, a vertical tolerance on alignment may be defined as a ratio between the vertical distance between the primary link and the drivetrain force vector to the vertical distance between the primary link and the guide-supporting link. In some embodiments, "substantially aligned" may refer to a ratio of at least .3 between (1) the vertical distance separating the primary link and the drivetrain vector and (2) the vertical distance separating the primary link from the guide-supporting secondary link. In a preferred embodiment, the ratio is less than 0.2. In another preferred embodiment, this ratio is less than 0.15.

In some embodiments, substantially aligned may refer to the angle between the primary link and the drive force vector being less than 30 degrees. In a preferred embodiment, the angle is less than 20 degrees. In another preferred embodiment, the angle is less than 15 degrees. Both the angle and the ratio may both apply in preferred embodiments. Thus, for a primary link to be substantially aligned with the drivetrain vector, the threshold condition for the vertical separation ratio must be met and the threshold condition on the angle between primary link and the drivetrain force vector must be met.

The location of the pedaling anti-squat point 1702, the braking anti-squat point 1704, and the shape and location of the IC path may be adjusted by varying the choices of and pivoting locations of at least the primary link 1710 and the guide-supporting link 1712. The IC path may refer to the location of the IC throughout the travel, or compression, of the suspension. Note that in this embodiment, the IC path is substantially vertical throughout the compression cycle of the suspension. Although the embodiment need not be so constrained. In some embodiments, travel of the suspension may be a range of relative motion between the front vehicle structure 1706 and the read vehicle structure 1708. A substantial range of the relative motion between the structures would preferably be approximately 75 percent of the total allowable movement between the structures. For example, movement at the end of the suspension travel (i.e., before a "bottom-out" situation) is less important to the drivetrain forces, as human-powered peddling is not likely occurring under such extreme loading situations of the suspension. In some embodiments the important range may be 70 percent of total travel, in others it may be 90 percent of total travel, depending on the type of vehicle and the total travel allowed, and the power source.

In one embodiment as shown in Figure 17A, as well as other various embodiments disclosed herein, the primary link 1710 and the guide-supporting link 1712 mav be configured and arranged such that the guide-supporting link 1712 guides the front and rear vehicle structures throughout the travel, or compression cycle, of the suspension such that the primary link 1710 remains substantially aligned with the chain, or drivetrain, force vector throughout the compression cycle. Again, alignment that we are concerned with herein is between the coupled ends of the link at the locations between the coupling to the vehicle structures, rather than necessarily following the actual shape of the link.

When the primary link 1710 is aligned with the drivetrain force vector, the effect of the drivetrain force and the suspension forces on the front and rear vehicle structures may be separated. In general, when a link, such as the primary link, is substantially aligned with the drivetrain force, a majority of the drivetrain force may be transmitted along the direction of the link. When the drivetrain force is completely aligned with an axis of the link, defined by the pivot point where the link is pivotally secured to the front vehicle structure and the other pivot point where the link is pivotally secured to the rear vehicle structure, the net torque on the link is zero. When the net torque, due to the drivetrain force, is zero, the link will not tend pivot due to the drivetrain force. Accordingly, a suspension system for a vehicle, such as a bicycle, where the primary link is substantially aligned with the drive chain such that a majority of the drivetrain force is transmitted through the aligned link, the suspension will not travel substantially or induce a substantial compression cycle due to the drivetrain force. Because a majority of the drivetrain force is transmitted along the primary link, more of the drivetrain energy is transmitted to the rear wheel of the vehicle. This may result in an increased efficiency of the vehicle. In at least one embodiment, the suspension system may be a motion-control system.

When a majority of the drivetrain force is transmitted along the primary link, only the remaining minority is transmitted along the guide-supporting link. Rather than being used to transmit a drivetrain force, the guide-supporting link's princinal role is to guide the front and rear vehicle sections through the suspension travel such that the primary link remains aligned with the drivetrain. Thus, the angle that the primary link makes with a horizontal reference line can substantially track the angle that the drivetrain makes with the same horizontal range throughout a large range of suspension travel and over an acceptable window of gear ratios. In some embodiments, the majority of the drivetrain force that is transmitted along the primary link may be greater than 75% of the total drivetrain force. In a preferred embodiment, the majority of the drivetrain force that is transmitted along the primary link may be greater than 80% of the total drive trail force.

In a bicycle, such as the embodiment shown in Figure 17A and other embodiments disclosed herein, where a guide-supporting link is employed to keep the primary link substantially in alignment with the drivetrain throughout at least a portion of the suspension's travel, the effects of the drivetrain force will be mostly separated from other suspension travel-inducing forces. Thus, the front and rear vehicle structures will be essentially isolated from the effects of drivetrain forces. Accordingly, the effect of the drivetrain forces on the IC path will be minimal such that location and path of the IC is effectively isolated from the drivetrain force throughout the travel of the suspension.

Configuring and arranging the primary link and the guide-supporting link such that the guide-supporting link guides the front and rear vehicle structures throughout the compression cycle of the suspension such that the primary link remains substantially aligned with and transfer a majority of the drivetrain force throughout at least a portion of the compression cycles provides a method to effectively isolate the location and path of the IC from effects due to the drivetrain force throughout the travel of the suspension. Because the IC is isolated from drivetrain effects, the bicycle designer has a greater degree of freedom to locate the IC and define its path, throughout the travel, in whatever fashion is appropriate for the style of riding that the bicycle will most likely be employed under.

For instance, a substantially vertical IC path, rather than a horizontal path, may have more stability throughout the suspension travel. Also, a more vertical path may generate a flatter squat percentage curve throughout the travel of the suspension, as compared to a horizontal IC path. Accordingly, the overall performance of the bicycle may be improved because the tuned IC path is isolated from drivetrain effects.

Depending on the configuration and arrangement of the primary and guide-supporting links, the primary link can be under tension or compression when the drivetrain forces is transmitted through it. For instance, if the pivot point that the primary link is connected to the rear structure is in front of the pivot point where the primary link is connected to the front structure, then the primary link will be under compression due to drivetrain forces. Likewise, when the pivot point that the primary link is connected to the rear structure is behind the pivot point where the primary link is connected to the front structure, then the primary link will be under tension due to drivetrain forces.

Figure 17B shows the vehicle squat conditions according to yet another embodiment of the present disclosure. The primary link 1720 is pivotally secured to the front vehicle structure at a first pivot point and pivotally secured to the rear vehicle structure at a second pivot point. The primary link 1720 is also pivotally secured to a spring/damper unit that is coupled to the front vehicle structure. In some embodiments, guide-supporting link 1722 may be a solid link as shown in Figure 17B, rather than the cylinder and sliding link configuration as shown in Figure 17A. In some of the various embodiments, at least one of primary link 1720 or guide-supporting link 1722 may be a rocker link or triangular link with at least three pivot points, as shown in Figure 17B.

A comparison between Figures 17A and 17B shows that similar anti-squat behavior, as well as the location and path of the IC may be achieved whether a cylinder and sliding link configuration is used for the guide-supporting link, as in guide-supporting link 1712 in Figure 17A or a solid link, as in guide-supporting link 1722 in Figure 17B. Four-bar configurations that employ a cylinder and sliding link configuration for one of the linkages, such as shown in Figure 17A, may be referred to as a sliding 4-bar, where the term sliding signifies that at least one of the primary link or the support guiding link is a sliding link. Likewise, four-bar configurations that do not employ a cylinder and sliding link configuration, such as shown in Figure 17B, may be referred to as rigid 4-bar, wherein the term rigid implies that neither the primary nor the guide-supporting link is a sliding link. In some embodiments, the term rigid 4-bar may be in reference to the fact that the distance between the pivot points on the front and rear structures remains essential fixed for each of the primary and guide-supporting links. The distance for each link may vary due to material elasticity of the links, however the length does not vary because a slider is translating along the length of a cylinder.

As with previously shown sliding 4-bar configurations, the primary link 1720 can be configured and arranged to be substantially aligned with the drivetrain force, when the suspension is not under compression, in the rigid 4-bar configuration shown in Figure 17B. Furthermore, the primary link 1720 and the guide-supporting link 1722 may be configured and arranged such that the guide-supporting link 1722 guides the front and rear vehicle structures throughout the travel, or compression cycle, of the suspension such that the primary link 1720 remains substantially aligned with the chain, or drivetrain, force vector throughout the compression cycle.

The primary and the guide-supporting links may be vertically separated. In some embodiments, the primary link may be positioned above the guide-supporting link. When the primary link is positioned above the guide-supporting link, the guide-supporting link may have an increased performance in guiding the above primary link such that the primary link better tracks the alignment of the drivetrain throughout the suspension cycle. Because a majority of the drivetrain force is transmitted between the front and rear vehicle structures through the primary link and the minority of the drivetrain force is transmitted along the guide-supporting link, the drivetrain force may be vertically separated. When the primary link is positioned above the guide-supporting link, the majority of the drivetrain force is transmitted above the guide-supporting link. When the majority of the drivetrain force is transmitted above, it may be easier to tune the linkage configuration to generate various anit-, neutral-, and pro-squat values that are more linear throughout the suspension's travel. In at least one embodiment, the primary link may be positioned below the guide-supporting link. In some embodiments, the employment of eccentrics and/or parallelograms may be used to increase the effectiveness of the keeping the primary link aligned with the drivetrain throughout the suspension travel.

In some embodiments, the primary and the guide-supporting links are configured and arranged such that primary link remains substantially aligned with the drivetrain over multiple gear ratios and preferably over a large range of suspension travel. Varying the gear ratio may alter the angle that the drivetrain, or chain, makes with a horizontal reference line. The configuration of the linkages may account for this variance in chain angle, such that the primary link remains substantially aligned with the chain over multiple gear ratios. In some embodiments, an average angle associated with multiple important gear ratios may be used to configure and arrange the two links such that the primary link remains aligned with the drivetrain through the average angle and a tolerance around the average angle. The range of important gear ratios may be based on at least the ride characteristics that are required from the bicycle design.

Figure 18A shows a bicycle with a variable slider 4-bar suspension system consistent with various embodiments disclosed herein. The placement of the pivot points on both the rear and front structures, as well as the length of the link used for the primary link may be varied to result in various squat characteristics of the suspension. Furthermore, the location and path of the IC may be varied by the choice of the position of the pivot points and length of the link. By varying these design choices, a designer may tune the ride characters of the bicycle. The guide-supporting link is the slider link 1808. Three different choices for a primary link are shown. In this embodiment, only the location of the pivot point for the primary link on the front vehicle structure is varied. The length of the length and the location of the pivot point on the rear structure is held constant. The three choices include an anti-squat primary link 1802, a neutral primary link 1804, and an anti-squat primary link 1806. Depending on which link is chosen, the squat behavior of the suspension will vary, as shown by the corresponding curves. Each of the pro-squat, the neutral-squat, and the anti-squat curves is plotted on an X-Y Cartesian coordinate system, where the X-axis represents an amount of wheel travel during the suspension cycle, where the amount of wheel travel ranges from extension to full suspension compression. The Y-axis represents the squat percentage.

Note the shape for each squat curve. For these three configurations of the primary link, the squat percentage value rises slowly when between the suspension travel extended to mid-travel. Between mid-travel to full compression, the squat percentage is relatively flat. The guide-supporting link may be similarly varied to provide the designer with an even greater range of ride tenability.

Note that the variance of the primary link's pivot point is slight, however the squat behavior and the IC path behavior can be significantly varied. By changing the primary link slightly, a vehicle can be transitioned between an anit-sauat mode to pro-sauat mode. Also note that for each of these configurations, the primary links 1802, 1804, 1806 are substantially aligned with the drivetrain, thus the majority of the drivetrain force may be transmitted along the primary link.

By configuring each choice for the primary link and the guide-supporting link to transmit a majority of the drivetrain force along the primary link, the squat behavior of the bicycle may be tuned. Also note the effect of these design choices of the IC path. For each configuration shown, the IC path is relatively vertical. As noted above, when the IC path is more vertical than horizontal, a greater ride stability may be achieved because the horizontal position of the IC is not varying as much. It should be noted that each of the squat curves and the location and path of the IC may be tuned to whatever the response the designer or riders wants by varying the links as discussed herein.

In some embodiments, the vehicle may be enabled to switch between various configurations of the primary link to vary the squat behavior. For instance, by varying which choice of the primary link that is employed, the vehicle can be switched from a pro-squat configuration to a neutral-squat or an anti-squat configuration by switching out the primary link. In some embodiments, the vehicle may be equipped with interchangeable links, so that a rider can switch out the links. In some embodiments, length and/or position of the links or the pivot points may be varied either statically or dynamically with the use of eccentric bushings, eccentric links, or cams. For static behavior, the eccentric or cams may be locked in an orientation. When a ride desires to change the riding characteristics of the bike, the rider may unlock the eccentric or cam and vary its position. For dynamic behavior, the eccentrics and/or camming devices may be enabled to transition between states during riding due to terrain, braking, and drive chain forces.

Figure 18B shows another bicycle with a variable rigid 4-bar suspension system consistent with various embodiments disclosed herein. Three different choices for a rocker-style primary link are shown: a pro-squat primary rocker link 1812, a neutral-squat rocker link 1814, and pro-squat rocker link 816. Three corresponding choices for guide-supporting links are shown: a pro-squat guide-supporting link 1822, a neutral-squat guide-supporting link 1824, and a anti-squat guide-supporting link 1826. Also shown are the corresponding squat percentage curves. Note how the curves for these various configuration differ from the curves shown in Figure 18A. The squat curves for the configurations shown in Figure 17B are even flatter than the corresponding squat curves for Figure 18A. Also note that curves are only drawn for 3 of the possible 9 configurations for these choices of primary and guide-supporting links.

More than 75% of the drivetrain's force is transmitted by the primary link in these embodiments. Also note that the pivot point of the rear structure for each of the guide-supporting links is in front of the bottom bracket.

Note that in these configurations shown in Figure 18B, each of the primary links is above the guide-supporting link and are under compression due to the drivetrain force. Also note that braking forces and terrain induced forces will also act to compress the primary link. The alignment of the drivetrain force, and braking and terrain/suspension forces occurs when the pivot point that the primary link is coupled to on the rear structure is behind the pivot point that the primary link is coupled to on the front structure. Thus, when the vehicle is under load, the drivetrain forces, the braking forces, and any terrain induced forces will act along the same direction along the primary links axis to compress the primary link. Because the alignment of the forces along the primary link, the riding characteristics of the vehicle may be enhanced. For instance, when the primary link does not transition between tension and compression throughout the riding conditions, the vehicle may be more stable. Furthermore, in at least some embodiments, the drivetrain forces, braking forces, and the terrain induced forces may remain aligned throughout the range of travel of the suspension system.

In some embodiments, the guide-supporting link may remain under either tension or compression throughout the range of travel. In at least some embodiments, the primary link that is substantially aligned with the drivetrain may transmit a majority of the drivetrain force. However, the guide-supporting link may transmit a minority of the drivetrain force. A portion of the braking forces and the terrain induced forces may also be transmitted along the guide-supporting link. The drivetrain forces, as well as the braking and terrain forces transmitted by the guide-supporting link may be aligned throughout at least a portion of the travel such that the guide-supporting link remains under either tension or compression throughout the portion of the travel.

Figure 18C shows another bicycle with a slider 4-bar suspension system consistent with various embodiments disclosed herein. Note that in this configuration, the slider guide-supporting link and the rigid primary link are configured and arranged so that the IC path is a more horizontal, rather than vertical, path. Also note that this configuration results in a more variable squat curve. For instance, this configuration may be employed when the rider wishes a greater amount of anti-squat during the beginning of a compression cycle, rather than in the middle, or when the suspension has been fully compressed. As mentioned above, ride characteristics such location and path of the IC as well as the squat behavior may be tuned by the designer or the rider based on choices of the type of link, as well as the location of the link and the pivots.

Figure 19A shows a bicycle with a rigid 4-bar suspension consistent with various embodiments disclosed herein. In this embodiment, the upper link is the primary link and is under tension. Note that in this embodiment, the pivot point that the primary link is coupled to on the rear structure is in front of the pivot point that the primary link is coupled to on the front structure. Thus, for similar reasons as discussed within the context of Figure 18B, the primary pivot is under tension when it is under the influence of drivetrain forces, braking forces, and/or terrain forces. Furthermore, as in the compression discussion above, the forces are in alignment and act cumulatively to increase the amount of tension that the primary link is under due to the one or more forces. Likewise, the drivetrain forces, the braking forces, and the terrain induced forces on the guide-supporting link are in alignment also.

Figure 19B shows a bicycle with a rigid 4-bar suspension consistent with various embodiments disclosed herein. In this embodiment, the lower link is the primary link is under tension due to drivetrain forces. Note that in this embodiment, the rear primary pivot is in front of the front primary pivot resulting in the tension in the primary pivot. Also, the rear guide-supporting pivot is in front of the front guide-supporting pivot. In this embodiment, braking and/or terrain forces may work in opposition to the drivetrain force. Thus, in a riding scenario where the bike transitions from a state where the drivetrain force may be the dominant force to a state where a braking or terrain induced force may be the dominant force, at least the primary link may transition from being under tension to under compression.

Figure 19C shows a bicycle with a rigid 4-bar suspension consistent with various embodiments disclosed herein. In this embodiment, the lower link is the primary link is under compression. Note that in this embodiment, the rear primary pivot behind the front primary pivot resulting in the compression in the primary pivot. Also, the rear guide-supporting pivot is behind the front guide-supporting pivot. As in the embodiment shown in Figure 19B, in this embodiment, braking and/or terrain forces may work in opposition to the drivetrain force. Thus, in a riding scenario where the bike transitions from a state where the drivetrain force may be the dominant force to a state where a braking or terrain induced force may be the dominant force, at least the primary link may transition from being under compression to under tension.

Figure 19D shows a bicycle with a slider 4-bar suspension consistent with various embodiments disclosed herein. In this embodiment, the hydraulic sliding link is coupled to a spring and damper unit.

Figure 20 shows an exploded view of an embodiment that employs a cam device in at least one pivot location. Primary link 2004 is pivotally secured to one of the pivot location 2008 on the front structure and one pivot location 2008 on the rear structure. Likewise, guide-supporting link 2006 is pivotally secured to the other pivot location 2008 on the front structure and the other pivot location on the rear structure. At least one cam or eccentric device 2002 may be employed in at least one of the pivots. The cam or eccentric device may be a static or dynamic. A static device may be locked into one of a plurality of locations such that the orientation will not transition to another orientation unless the position is unlocked. A dynamic device may transition between orientations in real time and in response to various loads placed upon the vehicle. For instance, a braking load, a drivetrain load, or a terrain induced load.

When an eccentric or cam device within a pivot transitions between the plurality of orientations, an alignment of the affected link may be varied. For instance, the angle the link makes with a horizontal may be changed. In at least one embodiment, when the gear ratio transitions, one or more cam devices may be employed to transition the alignment of the primary link such that the primary link remains in alignment with the drivetrain force over the variance in gear ratios. In some embodiments, a signal may be provided to the at least one cam device when a gear ratio is changed. In response of the signal, the cam device may transition. In this way, the primary link may remain aligned with the drivetrain.

In at least one embodiment, the camming or eccentric link may be employed for at least one of the primary or guide-supporting links. In a camming link, the length, as well as the alignment of the link may be varied. In at least one embodiment, a processor device, such as a microprocessor may be employed to control the orientation and/or transitions in the orientations in cam devices or camming links.

Figure 21 shows a bicycle with a slider 4-bar suspension consistent with various embodiments disclosed herein wherein the drivetrain includes at least one of a motor or engine. The motor or engine may be located at the front structure, such as motor or engine 2104. In at least one embodiment, the motor or engine may be located at the rear structure, such as motor or engine 2102.

Figure 22 shows a bicycle with a rigid 4-bar suspension consistent with various embodiments disclosed herein where the motion-control system is enabled for 50 mm of travel. Figure 23 shows a bicycle with a rigid 4-bar suspension consistent with various embodiments disclosed herein where the motion-control system is enabled for 110 mm of travel. Figure 24 shows a bicycle with a rigid 4-bar suspension consistent with various embodiments disclosed herein where the motion-control system is enabled for 170 mm of travel.

Figures 22-24 demonstrate, along with the design parameters disclosed therein demonstrate how a fixed-4 bar suspension system that is consistent with various embodiments herein may be tuned to design bicycles with various amounts of travel.

Figure 25 shows the anti-squat percentage, as a function of wheel travel, for a rigid 4-bar embodiment and for a sliding 4-bar embodiment. Note the similarities in the curves.

While the preferred embodiments of the invention have been illustrated and described, as noted above, many changes can be made without departing from the scope of the invention. Accordingly, the scope of the invention is not limited by the disclosure of the preferred embodiment. Instead, the scope of the invention is defined by the claims that follow.

## Claims

1. A vehicle (10) comprising:
a front structure (14),
a rear structure (16),
a drivetrain (78) that induces a drivetrain force (146) between the front and the rear structures when the vehicle is under acceleration, and
a motion-control system comprising:
a first member (48) coupling the front and the rear structures at coupling locations; and
a second member (46, 88) coupling the front and the rear structures, wherein
the first member is positioned above the second member,
said second member guides the front and the rear structures throughout a range of relative motion,
said drivetrain force is a chain force, and
said first member is situated and oriented relative to said drivetrain force such that a suspension of the vehicle does not travel substantially or induce a substantial compression cycle due to the drivetrain force,
**characterized in that** the first member transmits at least 75% of the drivetrain force.

2. The vehicle of Claim 1, wherein the first and the second members are configured and arranged such that the second member guides the front and the rear structures throughout a range of relative motion between the front and the rear structures such that the line between the coupling locations remains substantially aligned with and transmits a majority of the drivetrain force throughout a substantial range of the relative motion between the structures.

3. The vehicle of Claim 1, wherein:
the first and the second members are further configured and arranged such that the majority of the transmitted drivetrain force subjects the first member to a first amount of tension, and
when at least one of a braking force and a terrain-induced force are applied to the vehicle, the first member is subjected to a second amount of tension, wherein the second amount of tension is greater than or equal to the first amount of tension.

4. The vehicle of Claim 3, wherein the first member is subjected to tension throughout the range of relative motion.

5. The vehicle of Claim 1, wherein:
the first and the second members are further configured and arranged such that the majority of the transmitted drivetrain force subjects the first member to a first amount of compression, and
when at least one of a braking force or a terrain induced force are applied to the vehicle, the first member is subjected to a second amount of compression, wherein the second amount of compression is greater than or equal to the first amount of compression.

6. The vehicle of Claim 5, wherein the first member is subjected to compression throughout the range of relative motion.

7. The vehicle of Claim 1, wherein the second member is a slide link (88) and the slide link is pivotally secured to one of the front structure and the rear structure and rotationally fixed to the other of the rear structure and the front structure.

8. The vehicle of Claim 1, wherein at least one of the first member, the second member, or a coupling location includes a cam unit device (2002).

9. The vehicle of Claim 1, wherein at least one of the first or the second member is pivotally secured to a spring unit (50) that is pivotally secured to at least one of the front structure or the rear structure.

10. The vehicle of Claim 1, wherein the front structure is coupled to the rear structure by a spring unit (50).

11. The vehicle of Claim 1, wherein:
the second member is a slide link (88),
the front structure further comprises a bottom bracket shell (36), and
the second member is pivotally secured to the front structure adjacent the bottom bracket shell.

12. The vehicle of Claim 1, wherein the first member, under a drivetrain load, is subjected to exclusively one of tension and compression throughout the range of relative motion.

13. The vehicle of Claim 1, wherein
the front structure further comprises a bottom bracket shell (36),
the second member is a slider / cylinder of a slider-cylinder arrangement, and
the second member is pivotally secured to the front structure at the bottom bracket shell.

14. The vehicle of Claim 13, wherein
a portion of the rear structure constitutes the other, cylinder / slider, of the slider-cylinder arrangement.

## Patentansprüche

1. Fahrzeug (10), das umfasst:
eine vordere Struktur (14),
eine hintere Struktur (16),
einen Antriebsstrang (78), der eine Antriebskraft (146) zwischen den vorderen und den hinteren Strukturen induziert, wenn das Fahrzeug beschleunigt wird, und
ein Bewegungssteuerungssystem, das umfasst:
ein erstes Element (48), das die vorderen und die hinteren Strukturen an Verbindungsstellen verbindet; und
ein zweites Element (46, 88), das die vorderen und die hinteren Strukturen verbindet, wobei
das erste Element über dem zweiten Element positioniert ist,
das zweite Element die vorderen und die hinteren Strukturen über einen Bereich der Relativbewegung führt,
die Antriebskraft eine Kettenkraft ist, und
das erste Element relativ zu der Antriebskraft so angeordnet und ausgerichtet ist, dass eine Aufhängung des Fahrzeugs aufgrund der Antriebskraft nicht im Wesentlichen verschoben wird oder einen wesentlichen Kompressionszyklus induziert,
**dadurch gekennzeichnet, dass** das erste Element mindestens 75% der Antriebskraft überträgt.

2. Fahrzeug nach Anspruch 1, wobei das erste und das zweite Element so konfiguriert und angeordnet sind, dass das zweite Element die vorderen und die hinteren Strukturen über einen Bereich der Relativbewegung zwischen den vorderen und den hinteren Strukturen so führt, dass die Linie zwischen den Verbindungsstellen im Wesentlichen ausgerichtet bleibt und einen Großteil der Antriebskraft über einen wesentlichen Bereich der Relativbewegung zwischen den Strukturen überträgt.

3. Fahrzeug nach Anspruch 1, wobei:
das erste und das zweite Element ferner so konfiguriert und angeordnet sind, dass der Großteil der übertragenen Antriebskraft das erste Element einer ersten Spannungsmenge ausgesetzt ist, und
wenn mindestens eine von einer Bremskraft und einer durch das Gelände verursachte Kraft auf das Fahrzeug wirkt, das erste Element einer zweiten Spannungsmenge ausgesetzt ist, wobei die zweite Spannungsmenge größer oder gleich der ersten Spannungsmenge ist.

4. Fahrzeug nach Anspruch 3, wobei das erste Element über den Bereich der Relativbewegung einer Spannung ausgesetzt ist.

5. Fahrzeug nach Anspruch 1, wobei:
das erste und das zweite Element ferner so konfiguriert und angeordnet sind, dass der Großteil der übertragenen Antriebskraft das erste Element einer ersten Kompressionsmenge aussetzt, und
wenn mindestens eine von einer Bremskraft und einer durch das Gelände verursachte Kraft auf das Fahrzeug wirkt, das erste Element einer zweiten Kompressionsmenge ausgesetzt ist, wobei die zweite Kompressionsmenge größer oder gleich der ersten Kompressionsmenge ist.

6. Fahrzeug nach Anspruch 5, wobei das erste Element über den Bereich der Relativbewegung einer Kompression ausgesetzt ist.

7. Fahrzeug nach Anspruch 1, wobei das zweite Element ein Gleitglied (88) ist, und das Gleitglied schwenkbar an einer der vorderen Struktur und der hinteren Struktur befestigt und drehbar an der anderen der hinteren Struktur und der vorderen Struktur befestigt ist.

8. Fahrzeug nach Anspruch 1, wobei mindestens eines der ersten Elemente, der zweiten Elemente oder eine Verbindungsstelle eine Nockeneinheit (2002) umfasst.

9. Fahrzeug nach Anspruch 1, wobei mindestens eines der ersten oder zweiten Elemente schwenkbar an einer Federeinheit (50) befestigt ist, die schwenkbar an mindestens einer der vorderen Struktur oder hinteren Struktur befestigt ist.

10. Fahrzeug nach Anspruch 1, wobei die vordere Struktur durch eine Federeinheit (50) mit der hinteren Struktur verbunden ist.

11. Fahrzeug nach Anspruch 1, wobei:
das zweite Element ein Gleitglied (88) ist,
die vordere Struktur ferner eine Tretlagergehäuse (36) umfasst, und
das zweite Element schwenkbar an der vorderen Struktur neben dem Tretlagergehäuse befestigt ist.

12. Fahrzeug nach Anspruch 1, wobei das erste Element unter einer Antriebslast über den Bereich der Relativbewegung ausschließlich einer von Spannung und Kompression ausgesetzt ist.

13. Fahrzeug nach Anspruch 1, wobei:
die vordere Struktur ferner eine Tretlagergehäuse (36) umfasst,
das zweite Element ein Schieber/Zylinder einer Schieber-Zylinder-Anordnung ist, und
das zweite Element schwenkbar an der vorderen Struktur an der Tretlagergehäuse befestigt ist.

14. Fahrzeug nach Anspruch 13, wobei:
ein Teil der hinteren Struktur den anderen Teil, den Zylinder/Schieber, der Schieber-Zylinder-Anordnung bildet.

## Revendications

1. Véhicule (10) comprenant :
une structure avant (14),
une structure arrière (16),
une transmission (78) qui induit une force de transmission (146) entre les structures avant et arrière lorsque le véhicule est en cours d'accélération, et
un système de commande de mouvement comprenant :
un premier organe (48) couplant les structures avant et arrière à des emplacements de couplage ; et
un second organe (46, 88) couplant les structures avant et arrière, dans lequel le premier organe est positionné au-dessus du second organe,
ledit second organe guide les structures avant et arrière sur toute une plage de mouvement relatif,
ladite force de transmission est une force de chaîne, et
ledit premier organe est situé et orienté par rapport à ladite force de transmission de sorte qu'une suspension du véhicule ne se déplace sensiblement pas ni n'induit un cycle de compression substantiel en raison de la force de transmission,
**caractérisé en ce que** le premier organe transmet au moins 75 % de la force de transmission.

2. Véhicule selon la revendication 1, dans lequel le premier et le second organe sont configurés et agencés de sorte que le second organe guide les structures avant et arrière sur toute une plage de mouvement relatif entre les structures avant et arrière de sorte que la ligne entre les emplacements de couplage reste sensiblement alignée avec celles-ci et transmet une majorité de la force de transmission sur toute une plage substantielle du mouvement relatif entre les structures.

3. Véhicule selon la revendication 1, dans lequel :
le premier et le second organe sont en outre configurés et agencés de sorte que la majorité de la force de transmission transmise soumet le premier organe à une première quantité de tension, et
lorsqu'au moins l'une d'une force de freinage et d'une force induite par terrain est appliquée au véhicule, le premier organe est soumis à une seconde quantité de tension, dans lequel la seconde quantité de tension est supérieure ou égale à la première quantité de tension.

4. Véhicule selon la revendication 3, dans lequel le premier organe est soumis à une tension sur toute la plage de mouvement relatif.

5. Véhicule selon la revendication 1, dans lequel :
le premier et le second organe sont en outre configurés et agencés de sorte que la majorité de la force de transmission transmise soumet le premier organe à une première quantité de compression, et
lorsqu'au moins l'une d'une force de freinage ou d'une force induite par terrain est appliquée au véhicule, le premier organe est soumis à une seconde quantité de compression, dans lequel la seconde quantité de compression est supérieure ou égale à la première quantité de compression.

6. Véhicule selon la revendication 5, dans lequel le premier organe est soumis à une compression sur toute la plage de mouvement relatif.

7. Véhicule selon la revendication 1, dans lequel le second organe est une liaison coulissante (88) et la liaison coulissante est arrimée de manière pivotante à l'une de la structure avant et de la structure arrière et fixée en rotation à l'autre de la structure arrière et de la structure avant.

8. Véhicule selon la revendication 1, dans lequel au moins l'un du premier organe, du second organe ou d'un emplacement de couplage comporte un dispositif d'unité à came (2002).

9. Véhicule selon la revendication 1, dans lequel au moins l'un du premier ou du second organe est arrimé de manière pivotante à une unité de ressort (50) qui est arrimée de manière pivotante à au moins l'une de la structure avant ou de la structure arrière.

10. Véhicule selon la revendication 1, dans lequel la structure avant est couplée à la structure arrière par une unité de ressort (50).

11. Véhicule selon la revendication 1, dans lequel :
le second organe est un liaison coulissante (88),
la structure avant comprend en outre une coque de d'étrier inférieure (36), et
le second organe est arrimé de manière pivotante à la structure avant adjacente à la coque d'étrier inférieure.

12. Véhicule selon la revendication 1, dans lequel le premier organe, sous une charge de transmission, est soumis exclusivement à l'une d'une tension et d'une compression sur toute la plage de mouvement relatif.

13. Véhicule selon la revendication 1, dans lequel
la structure avant comprend en outre une coque d'étrier inférieure (36),
le second organe est un curseur / cylindre d'un agencement curseur-cylindre, et
le second organe est arrimé de manière pivotante à la structure avant au niveau de la coque d'étrier inférieure.

14. Véhicule selon la revendication 13, dans lequel
une partie de la structure arrière constitue l'autre du cylindre / curseur de l'agencement curseur-cylindre.
